# EUROPEAN PATENT APPLICATION

(11) **EP 4 668 604 A1**
(43) Date of publication of application: **24.12.2025**
(21) Application number: 24757090.6
(22) Date of filing: 02.02.2024
(51) Int. Cl.: H04B 7/06, H04L 5/00, H04B 7/0456, H04W 72/23, H04W 52/02, H04B 7/08, H04W 72/231

(54) **METHOD AND DEVICE FOR ADAPTIVE ANTENNA SCALING IN COMMUNICATION SYSTEM**

(30) Priority: 14.02.2023 KR 20230019669; 22.02.2023 KR 20230023572; 21.04.2023 KR 20230052974; 12.05.2023 KR 20230061885; 07.06.2023 KR 20230072863; 11.08.2023 KR 20230105650; 01.02.2024 KR 20240016253
(71) Applicant: Electronics and Telecommunications Research Institute, Daejeon 34129 (KR)
(72) Inventor: MOON, Sung Hyun, Daejeon 34129 (KR); KIM, Cheul Soon, Daejeon 34129 (KR); SHIN, Woo Ram, Daejeon 34129 (KR); LEE, Jung Hoon, Daejeon 34129 (KR)
(74) Representative: Betten & Resch
(86) International application number: PCT/KR2024/001589
(87) International publication number: WO 2024/172360

(57) **Abstract**

A method of a terminal comprises the steps of: receiving, from a base station, first configuration information with respect to a first CSI-RS resource; receiving, from the base station, second configuration information for a CSI reporting operation; receiving, on the basis of the first configuration information and the second configuration information, a CSI-RS through M CSI-RS antenna ports (where M is a natural number less than or equal to L ), which are a first subset of L CSI-RS antenna ports constituting the first CSI-RS; determining a first PMI on the basis of the M CSI-RS antenna ports; and transmitting, to the base station, a CSI report comprising the first PMI, wherein the step of determining the first PMI is carried out at least on the basis of a codebook in which the sizes of a first dimension and a second dimension are N1 and N2, respectively, and N1 and N2 may be each determined as divisors of M.

## Description

### [Technical Field]

The present disclosure relates to a method and an apparatus for adaptive antenna scaling, and more particularly, to a method and an apparatus for adaptively scaling antennas to enhance network power efficiency in a wireless communication system, and a method and an apparatus for channel state information-reference signal (CSI-RS) transmission corresponding thereto.

### [Background Art]

The mobile communication system, as a core infrastructure driving the development of the ICT industries, is evolving by overcoming the disadvantages and limitations of traditional communication schemes. The mobile communication system can provide advanced services in various use scenarios such as enhanced Mobile Broadband (eMBB), Ultra Reliable Low Latency Communication (URLLC), massive Machine Type Communication (mMTC), ultra-low power, ultra-precision, and ultra-wide coverage. Additionally, to achieve various performance metrics, the mobile communication system is trending towards discovering new communication frequency bands in the mid-band and high-band spectrums and more actively utilizing multi-antenna techniques.

Accordingly, while the communication performance and processing capabilities of communication nodes can be enhanced, there may be an accompanying increase in the power consumption of the communication nodes that make up the mobile communication system. In particular, there is a growing demand for technologies that reduce the power consumption not only of terminals but also of networks, specifically base stations, to support global carbon neutrality efforts and reduce the operating costs of communication service providers.

### [Disclosure]

### [Technical Problem]

The present disclosure is directed to providing a method and an apparatus for adaptively scaling antennas to enhance network power efficiency in a wireless communication system, and a method and an apparatus for channel state information-reference signal (CSI-RS) transmission corresponding thereto.

### [Technical Solution]

According to an exemplary embodiment of the present disclosure for achieving the above-described objective, a method of a terminal may comprise: receiving first configuration information on a first channel state information-reference signal (CSI-RS) resource from a base station; receiving second configuration information for a CSI reporting operation from the base station; receiving a CSI-RS through M CSI-RS antenna ports which are a first subset of L CSI-RS antenna ports corresponding to the first CSI-RS resource, based on the first configuration information and the second configuration information, wherein L is a natural number, and M is a natural number equal to or less than L; determining a first precoding matrix indicator (PMI) based on the M CSI-RS antenna ports; and transmitting a CSI report including the first PMI to the base station, wherein the determining of the first PMI may be performed based on a codebook in which sizes of at least a first dimension and a second dimension are N1 and N2, respectively, and N1 and N2 each may be determined as a divisor of M.

The second configuration information may include configuration information of a plurality of CSI report sub-configurations, the first CSI-RS resource may be referenced by a first CSI report sub-configuration included in the plurality of CSI report sub-configurations, and the first PMI may be a CSI corresponding to the first CSI report sub-configuration.

A second CSI-RS resource may be additionally referenced by the first CSI report sub-configuration, a CSI corresponding to the first CSI report sub-configuration may include a CSI-RS resource indicator (CRI), and the CRI may be an index of the first CSI-RS resource or the second CSI-RS resource.

The second CSI-RS resource may correspond to L CSI-RS antenna ports and may belong to a same CSI-RS resource set as the first CSI-RS.

The M CSI-RS antenna ports may be expressed as a bitmap of a length L, and the bitmap may be transmitted from the base station to the terminal as being included in the second configuration information.

Antenna port numbers of the M CSI-RS antenna ports may be reassigned in ascending order with continuous values from P to (P+M-1), P may be 0 or a natural number, and the first PMI may be determined based on the reassigned antenna port numbers.

M=2*N1*N2, N1 may be a value based on a number of CSI-RS antenna ports corresponding to the first dimension, and N2 may be a value based on a number of CSI-RS antenna ports corresponding to the second dimension.

M=2*N1*N2*Ng, N1 may be a value based on a number of CSI-RS antenna ports corresponding to the first dimension, N2 may be a value based on a number of CSI-RS antenna ports corresponding to the second dimension, Ng may be a number of antenna panels, and the codebook may be a codebook for multiple panels consisting of Ng panels.

The method may further comprise: receiving a CSI-RS through M2 CSI-RS antenna ports, which is a second subset of the L CSI-RS antenna ports; and determining a second PMI based on the M2 CSI-RS antenna ports.

The second PMI may be included in the CSI report and transmitted to the base station based on an indication by a higher layer message.

The first CSI-RS resource may be referenced by a second CSI report sub-configuration included in the plurality of CSI report sub-configurations, and the second PMI may be a CSI corresponding to the second CSI report sub-configuration.

According to another exemplary embodiment of the present disclosure for achieving the above-described objective, a method of a base station may comprise: transmitting first configuration information on a first channel state information-reference signal (CSI-RS) resource to the terminal; transmitting second configuration information for CSI reporting to the terminal; transmitting a CSI-RS to the terminal through all or part of L CSI-RS antenna ports corresponding to the first CSI-RS resource, wherein L is a natural number; and receiving, from the terminal, a CSI report including a first precoding matrix indicator (PMI) determined based on M CSI-RS antenna ports which are a first subset of the L CSI-RS antenna ports determined based on the first configuration information and the second configuration information, wherein the first PMI may be determined based on a code book in which sizes of at least a first dimension and a second dimension are N1 and N2, respectively, and N1 and N2 each may be determined as a divisor of M.

The second configuration information may include configuration information of a plurality of CSI report sub-configurations, the first CSI-RS resource may be referenced by a first CSI report sub-configuration included in the plurality of CSI report sub-configurations, and the first PMI may be a CSI corresponding to the first CSI report sub-configuration.

A second CSI-RS resource may be additionally referenced by the first CSI report sub-configuration, a CSI corresponding to the first CSI report sub-configuration may include a CSI-RS resource indicator (CRI), and the CRI may be an index of the first CSI-RS resource or the second CSI-RS resource.

The second CSI-RS resource may correspond to L CSI-RS antenna ports and may belong to a same CSI-RS resource set as the first CSI-RS.

The M CSI-RS antenna ports may be expressed as a bitmap of a length L, and the bitmap may be transmitted from the base station to the terminal as being included in the second configuration information.

Antenna port numbers of the M CSI-RS antenna ports may be reassigned in ascending order with continuous values from P to (P+M-1), P may be 0 or a natural number, and the first PMI may be determined based on the reassigned antenna port numbers.

M=2*N1 *N2, N1 may be a value based on a number of CSI-RS antenna ports corresponding to the first dimension, and N2 may be a value based on a number of CSI-RS antenna ports corresponding to the second dimension.

M=2*N1*N2*Ng, N1 may be a value based on a number of CSI-RS antenna ports corresponding to the first dimension, N2 may be a value based on a number of CSI-RS antenna ports corresponding to the second dimension, Ng may be a number of antenna panels, and the codebook may be a codebook for multiple panels consisting of Ng panels.

According to yet another exemplary embodiment of the present disclosure for achieving the above-described objective, a terminal may comprise a processor, and the processor may cause the terminal to perform: receiving first configuration information on a first channel state information-reference signal (CSI-RS) resource from a base station; receiving second configuration information for a CSI reporting operation from the base station; receiving a CSI-RS through M CSI-RS antenna ports which are a first subset of L CSI-RS antenna ports corresponding to the first CSI-RS resource, based on the first configuration information and the second configuration information, wherein L is a natural number, and M is a natural number equal to or less than L; determining a first precoding matrix indicator (PMI) based on the M CSI-RS antenna ports; and transmitting a CSI report including the first PMI to the base station, wherein the determining of the first PMI may be performed based on a codebook in which sizes of at least a first dimension and a second dimension are N1 and N2, respectively, and N1 and N2 each may be determined as a divisor of M.

### [Advantageous Effects]

Using the methods and apparatuses according to the present disclosure as described above, the antennas used for communication can be adaptively scaled to increase the power efficiency of the network.

### [Description of Drawings]

FIG. 1 is a conceptual diagram illustrating a first exemplary embodiment of a communication system.
FIG. 2 is a block diagram illustrating a first exemplary embodiment of a communication node constituting a communication system.
FIG. 3 is a conceptual diagram illustrating a first exemplary embodiment of a resource mapping method for CSI-RS antenna ports.
FIG. 4 is a conceptual diagram illustrating a first exemplary embodiment of a mapping method between a CSI-RS antenna port and TXRU(s) or physical antenna element(s).
FIG. 5A is a conceptual diagram illustrating a first exemplary embodiment of a TXRU muting method, and FIG. 5B is a conceptual diagram illustrating a second exemplary embodiment of a TXRU muting method.
FIG. 6 is a conceptual diagram illustrating a first exemplary embodiment of a CSI reporting method based on a plurality of CSI-RS antenna port sets.
FIG. 7 is a conceptual diagram illustrating a first exemplary embodiment of a method for configuring a plurality of CSI-RS antenna port sets.
FIG. 8 is a conceptual diagram illustrating a second exemplary embodiment of a method for configuring a plurality of CSI-RS antenna port sets.
FIG. 9 is a conceptual diagram illustrating a second exemplary embodiment of a CSI reporting method based on a plurality of CSI-RS antenna port sets.
FIG. 10 is a conceptual diagram illustrating a first exemplary embodiment of a resource mapping method for a CSI-RS antenna port set.
FIG. 11 is a conceptual diagram illustrating a second exemplary embodiment of a resource mapping method for a CSI-RS antenna port set.
FIG. 12 is a conceptual diagram illustrating a third exemplary embodiment of a resource mapping method for a CSI-RS antenna port set.

### [Best mode of the Invention]

While the present disclosure is capable of various modifications and alternative forms, specific embodiments thereof are shown by way of example in the drawings and will herein be described in detail. It should be understood, however, that there is no intent to limit the present disclosure to the particular forms disclosed, but on the contrary, the present disclosure is to cover all modifications, equivalents, and alternatives falling within the spirit and scope of the present disclosure. Like numbers refer to like elements throughout the description of the figures.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of the present disclosure. As used herein, the term "and/or" includes any and all combinations of one or more of the associated listed items.

In exemplary embodiments of the present disclosure, "at least one of A and B" may refer to "at least one of A or B" or "at least one of combinations of one or more of A and B". In addition, "one or more of A and B" may refer to "one or more of A or B" or "one or more of combinations of one or more of A and B".

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (i.e. "between" versus "directly between," "adjacent" versus "directly adjacent," etc.).

The terminology used herein is for the purpose of describing particular embodiments only and is not intended to be limiting of the present disclosure. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this present disclosure belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Hereinafter, exemplary embodiments of the present disclosure will be described in greater detail with reference to the accompanying drawings. In order to facilitate general understanding in describing the present disclosure, the same components in the drawings are denoted with the same reference signs, and repeated description thereof will be omitted.

A communication system to which exemplary embodiments according to the present disclosure are applied will be described. The communication system may be the 4G communication system (e.g. Long-Term Evolution (LTE) communication system or LTE-A communication system), the 5G communication system (e.g. New Radio (NR) communication system), the sixth generation (6G) communication system, or the like. The 4G communication system may support communications in a frequency band of 6 GHz or below, and the 5G communication system may support communications in a frequency band of 6 GHz or above as well as the frequency band of 6 GHz or below. The communication system to which the exemplary embodiments according to the present disclosure are applied is not limited to the contents described below, and the exemplary embodiments according to the present disclosure may be applied to various communication systems. Here, the communication system may be used in the same sense as a communication network, 'LTE' may refer to '4G communication system', 'LTE communication system', or 'LTE-A communication system', and 'NR' may refer to '5G communication system' or 'NR communication system'.

In exemplary embodiments, 'configuration of an operation (e.g. transmission operation)' may mean 'signaling of configuration information (e.g. information element(s), parameter(s)) for the operation' and/or 'signaling of information indicating performing of the operation'. 'Configuration of information element(s) (e.g. parameter(s))' may mean that the corresponding information element(s) are signaled. 'Configuration of a resource (e.g. resource region)' may mean that configuration information of the corresponding resource is signaled. The signaling may be performed based on at least one of system information (SI) signaling (e.g. transmission of system information block (SIB) and/or master information block (MIB)), RRC signaling (e.g. transmission of RRC parameters and/or higher layer parameters), MAC control element (CE) signaling, PHY signaling (e.g. transmission of downlink control information (DCI), uplink control information (UCI), and/or sidelink control information (SCI)), or a combination thereof.

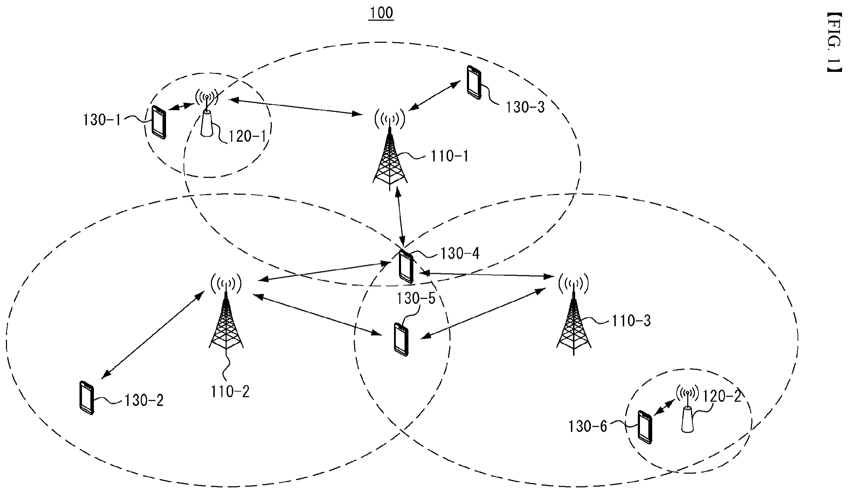

FIG. 1 is a conceptual diagram illustrating a first exemplary embodiment of a communication system.

Referring to FIG. 1, a communication system 100 may comprise a plurality of communication nodes 110-1, 110-2, 110-3, 120-1, 120-2, 130-1, 130-2, 130-3, 130-4, 130-5, and 130-6. Also, the communication system 100 may further comprise a core network (e.g. a serving gateway (S-GW), a packet data network (PDN) gateway (P-GW), and a mobility management entity (MME)). When the communication system 100 is a 5G communication system (e.g. New Radio (NR) system), the core network may include an access and mobility management function (AMF), a user plane function (UPF), a session management function (SMF), and the like.

The plurality of communication nodes 110 to 130 may support communication protocols defined in the 3rd generation partnership project (3GPP) technical specifications (e.g. LTE communication protocol, LTE-A communication protocol, NR communication protocol, or the like). The plurality of communication nodes 110 to 130 may support code division multiple access (CDMA) based communication protocol, wideband CDMA (WCDMA) based communication protocol, time division multiple access (TDMA) based communication protocol, frequency division multiple access (FDMA) based communication protocol, orthogonal frequency division multiplexing (OFDM) based communication protocol, filtered OFDM based communication protocol, cyclic prefix OFDM (CP-OFDM) based communication protocol, discrete Fourier transform-spread-OFDM (DFT-s-OFDM) based communication protocol, orthogonal frequency division multiple access (OFDMA) based communication protocol, single carrier FDMA (SC-FDMA) based communication protocol, non-orthogonal multiple access (NOMA) based communication protocol, generalized frequency division multiplexing (GFDM) based communication protocol, filter band multi-carrier (FBMC) based communication protocol, universal filtered multi-carrier (UFMC) based communication protocol, space division multiple access (SDMA) based communication protocol, or the like. Each of the plurality of communication nodes may mean an apparatus or a device. Exemplary embodiments may be performed by an apparatus or device. A structure of the apparatus (or, device) may be as follows.

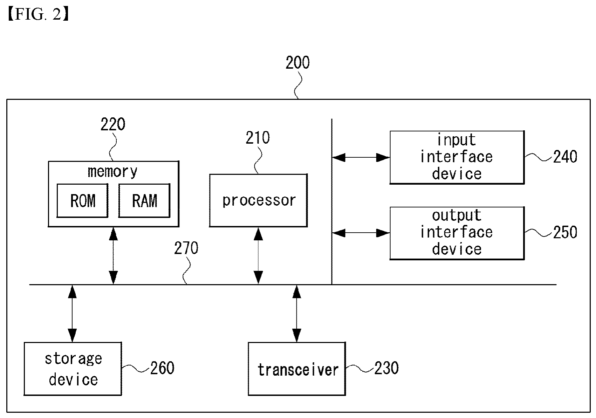

FIG. 2 is a block diagram illustrating a first exemplary embodiment of a communication node constituting a communication system.

Referring to FIG. 2, a communication node 200 may comprise at least one processor 210, a memory 220, and a transceiver 230 connected to the network for performing communications. Also, the communication node 200 may further comprise an input interface device 240, an output interface device 250, a storage device 260, and the like. The respective components included in the communication node 200 may communicate with each other as connected through a bus 270.

The processor 210 may execute a program stored in at least one of the memory 220 and the storage device 260. The processor 210 may refer to a central processing unit (CPU), a graphics processing unit (GPU), or a dedicated processor on which methods in accordance with embodiments of the present disclosure are performed. Each of the memory 220 and the storage device 260 may be constituted by at least one of a volatile storage medium and a non-volatile storage medium. For example, the memory 220 may comprise at least one of read-only memory (ROM) and random access memory (RAM).

Referring again to FIG. 1, the communication system 100 may comprise a plurality of base stations 110-1, 110-2, 110-3, 120-1, and 120-2, and a plurality of terminals 130-1, 130-2, 130-3, 130-4, 130-5, and 130-6. Each of the first base station 110-1, the second base station 110-2, and the third base station 110-3 may form a macro cell, and each of the fourth base station 120-1 and the fifth base station 120-2 may form a small cell. The fourth base station 120-1, the third terminal 130-3, and the fourth terminal 130-4 may belong to the cell coverage of the first base station 110-1. Also, the second terminal 130-2, the fourth terminal 130-4, and the fifth terminal 130-5 may belong to the cell coverage of the second base station 110-2. Also, the fifth base station 120-2, the fourth terminal 130-4, the fifth terminal 130-5, and the sixth terminal 130-6 may belong to the cell coverage of the third base station 110-3. Also, the first terminal 130-1 may belong to the cell coverage of the fourth base station 120-1, and the sixth terminal 130-6 may belong to the cell coverage of the fifth base station 120-2.

Here, each of the plurality of base stations 110-1, 110-2, 110-3, 120-1, and 120-2 may be referred to as NodeB (NB), evolved NodeB (eNB), gNB, advanced base station (ABS), high reliability-base station (HR-BS), base transceiver station (BTS), radio base station, radio transceiver, access point (AP), access node, radio access station (RAS), mobile multi-hop relay-base station (MMR-BS), relay station (RS), advanced relay station (ARS), high reliability-relay station (HR-RS), home NodeB (HNB), home eNodeB (HeNB), road side unit (RSU), radio remote head (RRH), transmission point (TP), transmission and reception point (TRP), or the like.

Each of the plurality of terminals 130-1, 130-2, 130-3, 130-4, 130-5, and 130-6 may be referred to as user equipment (UE), terminal equipment (TE), advanced mobile station (AMS), high reliability-mobile station (HR-MS), terminal, access terminal, mobile terminal, station, subscriber station, mobile station, portable subscriber station, node, device, on-board unit (OBU), or the like.

Meanwhile, each of the plurality of base stations 110-1, 110-2, 110-3, 120-1, and 120-2 may operate in the same frequency band or in different frequency bands. The plurality of base stations 110-1, 110-2, 110-3, 120-1, and 120-2 may be connected to each other via an ideal backhaul link or a non-ideal backhaul link, and exchange information with each other via the ideal or non-ideal backhaul. Also, each of the plurality of base stations 110-1, 110-2, 110-3, 120-1, and 120-2 may be connected to the core network through the ideal backhaul link or non-ideal backhaul link. Each of the plurality of base stations 110-1, 110-2, 110-3, 120-1, and 120-2 may transmit a signal received from the core network to the corresponding terminal 130-1, 130-2, 130-3, 130-4, 130-5, or 130-6, and transmit a signal received from the corresponding terminal 130-1, 130-2, 130-3, 130-4, 130-5, or 130-6 to the core network.

In addition, each of the plurality of base stations 110-1, 110-2, 110-3, 120-1, and 120-2 may support a multi-input multi-output (MIMO) transmission (e.g. single-user MIMO (SU-MIMO), multi-user MIMO (MU-MIMO), massive MIMO, or the like), a coordinated multipoint (CoMP) transmission, a carrier aggregation (CA) transmission, a transmission in unlicensed band, a device-to-device (D2D) communication (or, proximity services (ProSe)), an Internet of Things (IoT) communication, a dual connectivity (DC), or the like. Here, each of the plurality of terminals 130-1, 130-2, 130-3, 130-4, 130-5, and 130-6 may perform operations corresponding to the operations of the plurality of base stations 110-1, 110-2, 110-3, 120-1, and 120-2 (i.e. the operations supported by the plurality of base stations 110-1, 110-2, 110-3, 120-1, and 120-2). For example, the second base station 110-2 may transmit a signal to the fourth terminal 130-4 in the SU-MIMO manner, and the fourth terminal 130-4 may receive the signal from the second base station 110-2 in the SU-MIMO manner. Alternatively, the second base station 110-2 may transmit a signal to the fourth terminal 130-4 and fifth terminal 130-5 in the MU-MIMO manner, and the fourth terminal 130-4 and fifth terminal 130-5 may receive the signal from the second base station 110-2 in the MU-MIMO manner.

Each of the first base station 110-1, the second base station 110-2, and the third base station 110-3 may transmit a signal to the fourth terminal 130-4 in the CoMP transmission manner, and the fourth terminal 130-4 may receive the signal from the first base station 110-1, the second base station 110-2, and the third base station 110-3 in the CoMP manner. Also, each of the plurality of base stations 110-1, 110-2, 110-3, 120-1, and 120-2 may exchange signals with the corresponding terminals 130-1, 130-2, 130-3, 130-4, 130-5, or 130-6 which belongs to its cell coverage in the CA manner. Each of the base stations 110-1, 110-2, and 110-3 may control D2D communications between the fourth terminal 130-4 and the fifth terminal 130-5, and thus the fourth terminal 130-4 and the fifth terminal 130-5 may perform the D2D communications under control of the second base station 110-2 and the third base station 110-3.

A numerology applied to physical signals and channels in the communication system (e.g. NR communication system or 6G communication system) may be variable. The numerology may vary to satisfy various technical requirements of the communication system. In the communication system to which a cyclic prefix (CP) based OFDM waveform technology is applied, the numerology may include a subcarrier spacing and a CP length (or CP type). Table 1 below may be a first exemplary embodiment of configuration of numerologies for the CP-based OFDM. The subcarrier spacings may have an exponential multiplication relationship of 2, and the CP length may be scaled at the same ratio as the OFDM symbol length. Depending on a frequency band in which the communication system operates, at least some numerologies among the numerologies of Table 1 may be supported. In addition, in the communication system, numerologies not listed in Table 1 may be further supported. CP type(s) not listed in Table 1 (e.g. extended CP) may be additionally supported for a specific subcarrier spacing (e.g. 60 kHz).

Table 1 relates to a first exemplary embodiment of a method for configuring numerologies for a CP-OFDM based communication system.

**[Table 1]**

| Subcarrier spacing | 15kHz | 30kHz | 60kHz | 120kHz | 240kHz | 480kHz |
|---|---|---|---|---|---|---|
| OFDM symbol length [µs] | 66.7 | 33.3 | 16.7 | 8.3 | 4.2 | 2.1 |
| CP length [µs] | 4.76 | 2.38 | 1.19 | 0.60 | 0.30 | 0.15 |
| Number of OFDM symbols within 1ms | 14 | 28 | 56 | 112 | 224 | 448 |

In the following description, a frame structure in the communication system will be described. In the time domain, elements constituting a frame structure may include a subframe, slot, mini-slot, symbol, and the like. The subframe may be used as a unit for transmission, measurement, and the like, and the length of the subframe may have a fixed value (e.g. 1 ms) regardless of a subcarrier spacing. A slot may comprise consecutive symbols (e.g. 14 OFDM symbols). The length of the slot may be variable differently from the length of the subframe. For example, the length of the slot may be inversely proportional to the subcarrier spacing.

A slot may be used as a unit for transmission, measurement, scheduling, resource configuration, timing (e.g. scheduling timing, hybrid automatic repeat request (HARQ) timing, channel state information (CSI) measurement and reporting timing, etc.), and the like. The length of an actual time resource used for transmission, measurement, scheduling, resource configuration, etc. may not match the length of a slot. A mini-slot may include consecutive symbol(s), and the length of a mini-slot may be shorter than the length of a slot. A mini-slot may be used as a unit for transmission, measurement, scheduling, resource configuration, timing, and the like. A mini-slot (e.g. the length of a mini-slot, a mini-slot boundary, etc.) may be predefined in the technical specification. Alternatively, a mini-slot (e.g. the length of a mini-slot, a mini-slot boundary, etc.) may be configured (or indicated) to the terminal. When a specific condition is satisfied, use of a mini-slot may be configured (or indicated) to the terminal.

The base station may schedule a data channel (e.g. physical downlink shared channel (PDSCH), physical uplink shared channel (PUSCH), physical sidelink shared channel (PSSCH)) using some or all of symbols constituting a slot. In particular, for URLLC transmission, unlicensed band transmission, transmission in a situation where an NR communication system and an LTE communication system coexist, and multi-user scheduling based on analog beamforming, a data channel may be transmitted using a portion of a slot. In addition, the base station may schedule a data channel using a plurality of slots. In addition, the base station may schedule a data channel using at least one mini-slot.

In the frequency domain, elements constituting the frame structure may include a resource block (RB), subcarrier, and the like. One RB may include consecutive subcarriers (e.g. 12 subcarriers). The number of subcarriers constituting one RB may be constant regardless of a numerology. In this case, a bandwidth occupied by one RB may be proportional to a subcarrier spacing of a numerology. An RB may be used as a transmission and resource allocation unit for a data channel, control channel, and the like. Resource allocation of a data channel may be performed in units of RBs or RB groups (e.g. resource block group (RBG)). One RBG may include one or more consecutive RBs. Resource allocation of a control channel may be performed in units of control channel elements (CCEs). One CCE in the frequency domain may include one or more RBs.

In the communication system, a slot (e.g. slot format) may be composed of a combination of one or more of downlink period, flexible period (or unknown period), and an uplink period. Each of a downlink period, flexible period, and uplink period may be comprised of one or more consecutive symbols. A flexible period may be located between a downlink period and an uplink period, between a first downlink period and a second downlink period, or between a first uplink period and a second uplink period. When a flexible period is inserted between a downlink period and an uplink period, the flexible period may be used as a guard period.

A slot may include one or more flexible periods. Alternatively, a slot may not include a flexible period. The terminal may perform a predefined operation in a flexible period. Alternatively, the terminal may perform an operation configured by the base station semi-statically or periodically. For example, the periodic operation configured by the base station may include a PDCCH monitoring operation, synchronization signal/physical broadcast channel (SS/PBCH) block reception and measurement operation, channel state information-reference signal (CSI-RS) reception and measurement operation, downlink semi-persistent scheduling (SPS) PDSCH reception operation, sounding reference signal (SRS) transmission operation, physical random access channel (PRACH) transmission operation, periodically-configured PUCCH transmission operation, PUSCH transmission operation according to a configured grant, and the like. A flexible symbol may be overridden by a downlink symbol or an uplink symbol. When a flexible symbol is overridden by a downlink or uplink symbol, the terminal may perform a new operation instead of the existing operation in the corresponding flexible symbol (e.g. overridden flexible symbol).

Meanwhile, in the present disclosure, a synchronization signal block (SSB) may mean a signal set including synchronization signals and/or a broadcast channel. The synchronization signals may include a PSS and SSS, and the broadcast channel may include a physical broadcast channel (PBCH). The SSB may additionally include a reference signal. The reference signal may mean a demodulation reference signal (DM-RS) for demodulation of the PBCH, CSI-RS, tracking reference signal (TRS), positioning reference signal (PRS), phase tracking-reference signal (PT-RS), and the like. In the NR communication system, the SSB may refer to a synchronization signal/physical broadcast channel (SS/PBCH) block. The SSBs may be transmitted periodically, and one or more SSB(s) may be transmitted repeatedly in one cycle.

A format of a unit time resource (hereinafter, 'slot format') may be configured semi-statically by higher layer signaling (e.g. radio resource control (RRC) signaling). Information indicating a semi-static slot format may be included in system information, and the semi-static slot format may be configured in a cell-specific manner. In addition, a semi-static slot format may be additionally configured for each terminal through terminal-specific higher layer signaling (e.g. RRC signaling). A flexible symbol of a slot format configured cell-specifically may be overridden by a downlink symbol or an uplink symbol by terminal-specific higher layer signaling. In addition, a slot format may be dynamically indicated by physical layer signaling (e.g. slot format indicator (SFI) included in downlink control information (DCI)). The semi-statically configured slot format may be overridden by a dynamically indicated slot format. For example, a semi-static flexible symbol may be overridden by a downlink symbol or an uplink symbol by SFI.

The base station and the terminal may perform downlink operations, uplink operations, and sidelink operations in a bandwidth part. A bandwidth part may be defined as a set of consecutive RBs (e.g. physical resource blocks (PRBs)) having a specific numerology in the frequency domain. RBs constituting one bandwidth part may be consecutive in the frequency domain. One numerology may be used for transmission of signals (e.g. transmission of control channel or data channel) in one bandwidth part. In exemplary embodiments, when used in a broad sense, a 'signal' may refer to any physical signal and channel. A terminal performing an initial access procedure may obtain configuration information of an initial bandwidth part from the base station through system information. A terminal operating in an RRC connected state may obtain the configuration information of the bandwidth part from the base station through terminal-specific higher layer signaling.

The configuration information of the bandwidth part may include a numerology (e.g. a subcarrier spacing and a CP length) applied to the bandwidth part. Also, the configuration information of the bandwidth part may further include information indicating a position of a start RB (e.g. start PRB) of the bandwidth part and information indicating the number of RBs (e.g. PRBs) constituting the bandwidth part. At least one bandwidth part among the bandwidth part(s) configured in the terminal may be activated. For example, within one carrier, one uplink bandwidth part and one downlink bandwidth part may be activated respectively. In a time division duplex (TDD) based communication system, a pair of an uplink bandwidth part and a downlink bandwidth part may be activated. The base station may configure a plurality of bandwidth parts to the terminal within one carrier, and may switch the active bandwidth part of the terminal.

Meanwhile, in exemplary embodiments, "a certain frequency band (e.g. carrier, bandwidth part, resource block (RB) set, listen before talk (LBT) subband, guard band, etc.) is activated" may refer to a state in which a base station or terminal is able to transmit and receive signals using the corresponding frequency band. In addition, "a certain frequency band is activated" may refer to a state in which a radio frequency (RF) filter (e.g. band-pass filter) of a transceiver operates by including the corresponding frequency band.

In exemplary embodiments, an RB may mean a common RB (CRB). Alternatively, an RB may mean a PRB or a virtual RB (VRB). In the NR communication system, a CRB may refer to an RB constituting a set of consecutive RBs (e.g. common RB grid) based on a reference frequency (e.g. point A). Carriers, bandwidth part, and the like may be arranged on the common RB grid. That is, a carrier, bandwidth part, etc. may be composed of CRB(s). An RB or CRB constituting a bandwidth part may be referred to as a PRB, and a CRB index within the bandwidth part may be appropriately converted into a PRB index. In an exemplary embodiment, an RB may refer to an interlace RB (IRB).

A PDCCH may be used to transmit a DCI or DCI format to the terminal. A minimum resource unit constituting a PDCCH may be a resource element group (REG). An REG may be composed of one PRB (e.g. 12 subcarriers) in the frequency domain and one OFDM symbol in the time domain. Thus, one REG may include 12 resource elements (REs). A demodulation reference signal (DMRS) for demodulating a PDCCH may be mapped to 3 REs among 12 REs constituting the REG, and control information (e.g. modulated DCI) may be mapped to the remaining 9 REs. One PDCCH candidate may be composed of one CCE or aggregated CCEs. One CCE may be composed of a plurality of REGs. The NR communication system may support CCE aggregation levels 1, 2, 4, 8, 16, and the like, and one CCE may consist of six REGs.

A control resource set (CORESET) may be a resource region in which the terminal performs a blind decoding on PDCCHs. The CORESET may be composed of a plurality of REGs. The CORESET may consist of one or more PRBs in the frequency domain and one or more symbols (e.g. OFDM symbols) in the time domain. The symbols constituting one CORESET may be consecutive in the time domain. The PRBs constituting one CORESET may be consecutive or non-consecutive in the frequency domain. One DCI (e.g. one DCI format or one PDCCH) may be transmitted within one CORESET. A plurality of CORESETs may be configured with respect to a cell and a terminal, and the plurality of CORESETs may overlap in time-frequency resources.

A CORESET may be configured in the terminal by a PBCH (e.g. system information or a master information block (MIB) transmitted on the PBCH). The identifier (ID) of the CORESET configured by the PBCH may be 0. That is, the CORESET configured by the PBCH may be referred to as a CORESET #0. A terminal operating in an RRC idle state may perform a monitoring operation in the CORESET #0 in order to receive a first PDCCH in the initial access procedure. Not only terminals operating in the RRC idle state but also terminals operating in the RRC connected state may perform monitoring operations in the CORESET #0. The CORESET may be configured in the terminal by other system information (e.g. system information block type 1 (SIB1)) other than the system information transmitted through the PBCH. For example, for reception of a random access response (or Msg2) in a random access procedure, the terminal may receive the SIB1 including the configuration information of the CORESET. Also, the CORESET may be configured in the terminal by terminal-specific higher layer signaling (e.g. RRC signaling).

A search space may be a set of PDCCH candidate(s) or a set of resource regions occupied by the PDCCH candidate(s). The terminal may perform a blind decoding on each of the PDCCH candidates within a predefined search space. The terminal may determine whether a PDCCH is transmitted to itself by performing a cyclic redundancy check (CRC) on a result of the blind decoding. When it is determined that a PDCCH is a PDCCH for the terminal itself, the terminal may receive the PDCCH.

One or more search space(s) may constitute a search space set. The search space may be defined/configured for each CCE aggregation level, and the search space set may mean a search space for each CCE aggregation level or a set of search spaces for all CCE aggregation levels. For each CCE aggregation level, a PDCCH candidate may be configured with CCE(s) selected by a predefined hash function within a CORESET or search space occasion. In exemplary embodiments, 'search space set' may mean 'search space'.

A search space set may be logically associated with one CORESET. One CORESET may be logically associated with one or more search space sets. A search space set for transmitting a common DCI or a group common DCI may be referred to as a common search space set (hereinafter, referred to as a 'CSS set'). The common DCI or the group common DCI may include at least one of resource allocation information of a PDSCH for transmission of system information, paging, a power control command, SFI, or a preemption indicator. In the case of the NR communication system, the common DCI may correspond to DCI formats 0_0, 1_0, etc., and a cyclic redundancy check (CRC) of the common DCI may be scrambled by a system information-radio network temporary identifier (SI-RNTI), paging-RNTI (P-RNTI), random access-RNTI (RA-RNTI), temporary cell-RNTI (TC-RNTI), or the like. The group common DCI may correspond to a DCI format 2_X (X=0, 1, 2, ...), or the like, and a CRC of the group common DCI may be scrambled by a slot format indicator-RNTI (SFI-RNTI) or the like. The CSS set may include Type 0, Type 0A, Type 1, Type 2, and Type 3 CSS sets.

A search space set for transmitting a UE-specific DCI may be referred to as a UE-specific search space set (hereinafter, referred to as a 'USS set'). The UE-specific DCI may include scheduling and resource allocation information for a PDSCH, PUSCH, PSSCH, or the like. In the case of the NR communication system, the UE-specific DCI may correspond to DCI formats 0_1, 0_2, 1_1, 1_2, 3_0, 3_1, or the like, and a CRC of the UE-specific DCI may be scrambled by a C-RNTI, configured scheduling-RNTI (CS-RNTI), modulation and coding scheme-C-RNTI (MCS-C-RNTI), or the like. In consideration of scheduling freedom or fallback transmission, a UE-specific DCI may be transmitted even in a CSS set. In this case, the UE-specific DCI may be transmitted according to the DCI format corresponding to the common DCI. For example, the terminal may monitor a PDCCH (e.g. DCI formats 0_0, 0_1) whose CRC is scrambled with a C-RNTI, CS-RNTI, MCS-C-RNTI, or the like in the CSS set.

The Type 0 CSS set may be used for receiving a DCI scheduling a PDSCH including an SIB1, and may be configured through a PBCH or cell-specific RRC signaling. The ID of the Type 0 CSS set may be assigned as or set to 0. The type 0 CSS set may be logically combined with the CORESET #0.

The terminal may improve channel estimation performance or form a transmission/reception beam by using large-scale propagation characteristics of a radio channel. The large-scale propagation characteristics of radio channels experienced by first and second signals transmitted between communication nodes may be the same. If the large-scale propagation characteristics of the first signal and the second signal transmitted from the base station to the terminal are the same, a quasi-co-location (QCL) relation may be established between the first signal and the second signal. In addition, the large-scale propagation characteristics of the radio channel may be defined by QCL parameters. For example, the QCL parameters include a delay spread, Doppler spread, Doppler shift, average gain, average delay, spatial Rx parameters, and the like. The spatial Rx parameters may correspond to characteristics of a reception beam, reception channel spatial correlation, reception spatial filter, and transmission/reception beam pair. In the present disclosure, the spatial Rx parameters may be referred to as 'spatial QCL' for convenience. A set of one or more QCL parameter(s) may be referred to as a QCL type. The QCL types used in the NR communication system may include at least Type A, Type B, Type C, and Type D. The Type D QCL may include the spatial Rx parameters and may correspond to a spatial QCL.

The base station may signal a TCI state or TCI to the terminal. In the present disclosure, 'TCI state' and 'TCI' may be used interchangeably. A TCI state may include information indicating a QCL relation between a QCL source signal (e.g. first signal) and a QCL target signal (e.g. second signal). Specifically, the TCI state may include one or more information indicating the QCL source signal (e.g. type of the source signal, ID of the source signal, etc.) and information indicating QCL parameter(s) (e.g. QCL type(s)) for which the QCL relation is established. In addition, information on the TCI state may be included in configuration information of the QCL target signal, and the terminal may identify the QCL target signal based on the inclusion relationship. The QCL source signal may include an SSB, synchronization signal, reference signal (e.g. CSI-RS, DM-RS), physical channel, and/or the like. The QCL target signals may include a reference signals, physical channel, a DM-RS of physical channel, and/or the like. The QCL source signal and QCL target signal may be a downlink physical signal or channel or an uplink physical signal or channel. Transmission directions of the QCL source signal and the QCL target signal may be the same or different. The terminal may assume that the large-scale propagation characteristics of the first signal are equally applied to the second signal based on the TCI state signaling information.

A QCL relation may be established in a PDCCH monitored by the terminal. The terminal may assume that a PDCCH (i.e. PDCCH DM-RS) has a QCL relation with a certain signal (i.e. QCL source signal). The QCL relation may be determined based on signaling of the TCI state information described above. Alternatively, the QCL relation may be determined by a method predefined in the technical specifications. The terminal may perform a beamforming operation, channel estimation operation, etc. for PDCCH monitoring and reception based on the QCL relation.

The same TCI or QCL relation may be applied within one CORESET. That is, the terminal may perform monitoring operations (or reception operations) for all search space sets or all PDCCH candidates belonging to the same CORESET based on the same QCL relation. The TCI or QCL relation applied to each CORESET may be configured by the base station or derived by predefined rules. A QCL relation of a specific CORESET may be determined based on the terminal's initial access or random access procedure. For example, a CORESET 0 may have a QCL relation with an SSB selected in the initial access procedure, a PRACH recently transmitted in the random access procedure, or the like. When a CORESET pool is configured in the terminal, the same QCL relation may be established for all CORESETs belonging to the same CORESET pool. Alternatively, a TCI or QCL relation may be applied for each search space set. In this case, different TCIs or different QCL relations may be applied to monitor multiple search space sets within the same CORESET.

A link adaptation technique may be used in communication systems. That is, a transmitting node may adaptively change the number of transmission layers, modulation and coding (MCS), precoding or beamforming, transmission beam, reception beam, etc. when it wishes to transmit a data channel, control channel, etc. For example, when transmitting a PDSCH to a terminal, a base station may instantaneously determine a modulation scheme and a channel code rate to be applied to the PDSCH, and form one or more transmission layers by applying appropriate precoding to the PDSCH. The link adaptation parameters described above may be included in scheduling information of the PDSCH, and may be transmitted to the terminal as being included in DCI scheduling the PDSCH, or included in semi-persistent scheduling (SPS) configuration information.

The link adaptation technique may be performed based on channel state information (CSI) reported from the terminal to the base station. The base station may transmit a signal (e.g. SSB, CSI-RS, TRS, DM-RS) for the terminal to measure CSI to the terminal. The terminal may receive the signal, and calculate CSI based on the received signal. The CSI or CSI types may include channel quality indicator (CQI), precoding matrix indicator (PMI), rank indicator (RI), layer indicator (LI), beam index, CSI-RS resource indicator (CRI), and SSB resource indicator (SSBRI), etc. Additionally, in a broad sense, the CSI may include beam quality measurement values (e.g. layer 1-received signal received power (L1-RSRP), layer 1-signal-to-interference-plus-noise ratio (L1-SINR), or the like). The terminal may report the calculated CSI to the base station on an uplink channel (e.g. PUCCH, PUSCH).

In order to receive a CSI measurement report from the terminal, the base station may transmit CSI resource configuration information to the terminal. A CSI resource configuration may include configuration information of CSI-RS resource(s). For example, a CSI resource configuration may include configuration information regarding one or more CSI resource set(s). A CSI resource set may include CSI-RS resource set(s) and/or SSB resource set(s) for channel measurement, and may include CSI-interference measurement (CSI-IM) resource set(s) for interference measurement. Here, a CSI-RS resource set may refer to a set including one or more CSI-RS resource(s). When necessary, a plurality of CSI resource configurations may be configured in the terminal. In the NR communication system, a CSI resource configuration may be referred to as 'CSI resource setting'.

In the present disclosure, a CSI-RS resource may refer to a physical resource in which a CSI-RS is transmitted. In addition, a CSI-RS resource may mean CSI-RS resource configuration parameter(s) or a CSI-RS resource configuration unit. The terminal may be configured with two types of CSI-RS resources. The first type is a non-zero-power (NZP) CSI-RS resource in which the base station actually transmits a CSI-RS to the terminal, and the second type is a zero-power (ZP) CSI-RS in which the base station does not actually transmit a CSI-RS to the terminal. Hereinafter, unless otherwise stated, a CSI-RS resource may be understood to refer to a NZP CSI-RS resource. A CSI-RS resource may correspond to a CSI-RS or CSI-RS sequence.

A CSI-RS resource may be configured as periodically, semi-persistently, or aperiodically. A periodic CSI-RS resource or activated semi-persistent CSI-RS resource may appear periodically and repeatedly, and a location of the resource may be determined by a periodicity and an offset. An aperiodic CSI-RS resource may be dynamically allocated by DCI. Up to M CSI-RS antenna ports may be mapped to each CSI-RS resource (M is a natural number). In the NR communication system, M may be 32.

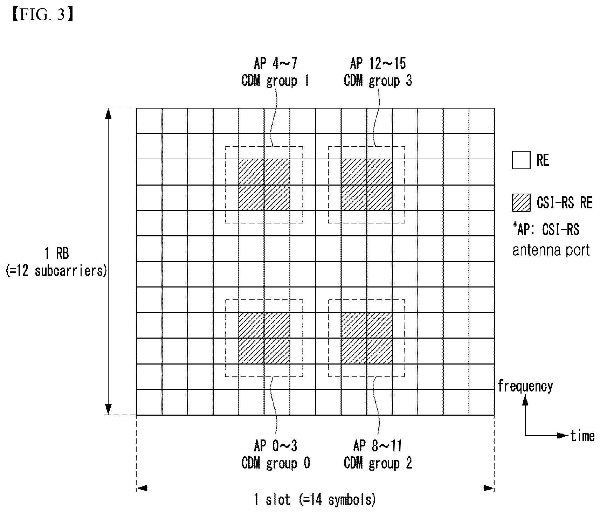

FIG. 3 is a conceptual diagram illustrating a first exemplary embodiment of a resource mapping method for CSI-RS antenna ports.

Referring to FIG. 3, a terminal may receive CSI-RS resource configuration information from a base station and receive CSI-RS(s) based on the CSI-RS resource configuration information. A CSI-RS resource may be configured with up to 16 CSI-RS antenna ports. As illustrated in FIG. 3, 16 CSI-RS antenna ports may be mapped within one slot and one resource block (RB) according to a predetermined pattern. When a CSI-RS transmission bandwidth includes multiple RBs, a CSI-RS may be mapped to the multiple RBs in the same pattern. Here, an RB may mean a physical resource block (PRB).

In the present exemplary embodiment, it is assumed that indexes (or numbers) of the CSI-RS antenna ports are assigned in ascending order from 0. Accordingly, the 16 CSI-RS antenna ports may be assigned indexes from 0 to 15. However, the indexes are merely identifiers for distinguishing different CSI-RS antenna ports, and numbers other than 0 to 15 may also be used. For example, in the NR communication system, the indexes of the CSI-RS antenna ports may be assigned in ascending order starting from 3000. The indexes from 0 to 15 illustrated in FIG. 3 may correspond to indexes from 3000 to 3015 in the NR communication system. Antenna port numbers of CSI-RS antenna ports for determining CSI (e.g. PMI), which will be described later, may be reassigned as continuous values in ascending order starting from P (P is an integer, e.g. P=3000).

The CSI-RS antenna ports may be mapped to resource elements (REs) as being multiplexed in form of time division multiplexing (TDM), frequency division multiplexing (FDM), and/or code division multiplexing (CDM).

Referring to FIG. 3, TDM, FDM, and CDM may all be applicable to multiplexing of 16 CSI-RS antenna ports. For example, the CSI-RS antenna ports 0 to 3 may be mapped to the fifth to sixth symbols and the third to fourth subcarriers, the CSI-RS antenna ports 4 to 7 may be mapped to the fifth to sixth symbols and the ninth to tenth subcarriers, the CSI-RS antenna ports 8 to 11 may be mapped to the ninth to tenth symbols and the third to fourth subcarriers, and the CSI-RS antenna ports 12 to 15 are mapped to the ninth to tenth symbols and the ninth to tenth subcarriers. In this case, the CSI-RS antenna ports 0 to 3 and the CSI-RS antenna ports 4 to 7 may be FDMed in the same symbols. Additionally, the CSI-RS antenna ports 0 to 3 and the CSI-RS antenna ports 8 to 11 may be TDMed in the same subcarriers. Additionally, four CSI-RS antenna ports mapped to four adjacent REs may be CDMed and form a CDM group. For example, the CSI-RS antenna ports 0 to 3, the CSI-RS antenna ports 4 to 7, the CSI-RS antenna ports 8 to 11, and the CSI-RS antenna ports 12 to 15 may form a CDM group 0, CDM group 1, CDM group 2, and CDM group 3, respectively.

A plurality of CDMed antenna ports may be distinguished by different orthogonal cover codes (OCCs). The four different CSI-RS antenna ports of the CDM group with a size of 4 may be distinguished from each other by time-domain (TD)-OCCs of a length 2 and frequency-domain (FD)-OCCs of a length 2. An order in which the CSI-RS antenna ports are mapped to CSI-RS REs may conform to predefined rules. In the present exemplary embodiment, the indexes of the CSI-RS antenna ports are assigned first within the CDM group, then assigned in ascending order in the frequency domain (i.e. in a direction of increasing subcarrier indexes), and finally assigned in ascending order in the time domain (i.e. in a direction of increasing symbol indexes).

The CSI-RS mapping pattern shown in FIG. 3 is merely one exemplary embodiment, and the CSI-RS resource mapping may be implemented in various forms. The terminal may receive from the base station configuration information related to the number of CSI-RS antenna ports constituting a CSI-RS resource, size of each CDM group, number of CDM groups, location of each CDM group, frequency domain CSI-RS transmission density, time domain periodicity, offset, and/or the like, determine a mapping location of each CSI-RS antenna port in the CSI-RS resource based on the configuration information, and receive each CSI-RS antenna port at the identified mapping location. The base station may also map CSI-RS antenna ports to the CSI-RS resource based on the configuration information, and transmit the CSI-RS antenna ports to the terminal. Hereinafter, the terminal receiving the CSI-RS antenna port(s) may be interpreted as having the same meaning as the terminal receiving the CSI-RS through the corresponding CSI-RS antenna port(s). In addition, the base station transmitting the CSI-RS antenna port(s) may be interpreted as having the same meaning as the base station transmitting the CSI-RS through the corresponding CSI-RS antenna port(s).

A transmission signal of the base station may be processed by transceiver unit(s) (TXRU(s)), and a processed output signal may be beamformed by an antenna module composed of physical antenna elements, and radiated into space as being converted into electromagnetic waves. A TXRU of a signal transmitter may also be referred to as a transmitter unit (TXU), radio frequency (RF) chain, or the like. The TXRU(s) and the physical antenna elements may be mapped to each other in a pre-implemented manner to suit a desired beam shape, and the mapping may be controlled and changed by the base station if necessary. Such the mapping may be referred to as antenna virtualization.

According to the above-described operations, each CSI-RS antenna port constituting the CSI-RS resource may be mapped to one or more TXRU(s). Additionally, by TXRU-physical antenna element mapping, each CSI-RS antenna port may be mapped to one or more physical antenna element(s).

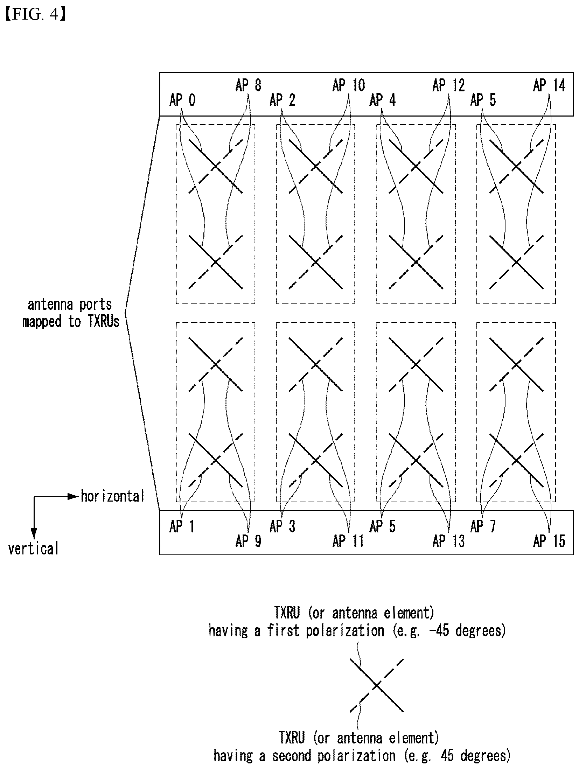

FIG. 4 is a conceptual diagram illustrating a first exemplary embodiment of a mapping method between a CSI-RS antenna port and TXRU(s) or physical antenna element(s).

Referring to FIG. 4, a two-dimensional planar antenna panel may be used for signal transmission, and the two-dimensional planar antenna panel may be composed of physical antenna elements arranged to have cross-polarization. The physical antenna elements may be arranged on a two-dimensional plane consisting of a first direction (e.g. horizontal direction) and a second direction (e.g. vertical direction), and each physical antenna element may be arranged to have a first polarization or a second polarization. Additionally, each TXRU may be mapped to physical antenna elements with a specific polarization. A TXRU mapped to physical antenna elements having the first polarization (or second polarization) may be referred to as a TXRU having the first polarization (or second polarization) for convenience.

The base station may transmit a CSI-RS resource configured with 16 CSI-RS antenna ports to the terminal. The 16 CSI-RS antenna ports may be mapped to 32 TXRUs. As illustrated in FIG. 4, among the 32 TXRUs, 16 TXRUs may have the first polarization, and the remaining 16 TXRUs may have the second polarization. In this case, each CSI-RS antenna port may be mapped to two TXRUs which have the same polarization and are adjacent in the second direction (e.g. vertical direction). An order in which the CSI-RS antenna ports are mapped in a first domain (e.g. horizontal domain), second domain (e.g. vertical domain), and polarization domain may be determined based on a CSI codebook structure used for PMI feedback. For example, when a dual codebook W, which is applied to polarized antennas and has the structure of W=W1*W2, is used, the CSI-RS antenna ports may be indexed first in ascending order in the second domain (e.g. vertical domain), indexed second in ascending order in the first domain (e.g. horizontal domain), and indexed finally in ascending order in the polarization domain. As a result, the CSI-RS antenna ports 0 to 7 may be respectively mapped to two TXRUs having the first polarization, and the CSI-RS antenna ports 8 to 15 may be respectively mapped to two TXRUs having the second polarization. In the present exemplary embodiment, a TXRU may be considered as a physical antenna element. That is, the concept shown in FIG. 4 may be interpreted as a form in which 16 CSI-RS antenna ports are mapped to 32 physical antenna elements. In this case, a mapping relationship related to the TXRUs may be defined separately. For example, the TXRUs and the physical antenna elements may have a one-to-one correspondence. Alternatively, the CSI-RS antenna ports and the TXRUs may have a one-to-one correspondence.

Meanwhile, a CSI reporting (or CSI feedback) operation of the terminal may be performed based on a CSI report configuration configured by the base station. The CSI report configuration may include configuration information related to a type (or report quantity) of CSI to be reported by the terminal to the base station, frequency range of the CSI, whether the CSI is for a wideband or narrowband, time domain periodicity, CSI codebook, and the like. The CSI reporting operations may be performed periodically, semi-persistently, or aperiodically. A CSI report may be transmitted on a PUCCH or PUSCH. A CSI report configuration may be associated with a CSI resource configuration. The terminal may perform a CSI calculation operation based on not only a CSI resource configuration but also a CSI report configuration associated with the CSI resource configuration. In the NR communication system, a CSI report configuration may be referred to as 'CSI report setting'.

Meanwhile, as communication systems become more sophisticated, techniques for increasing network power efficiency are attracting attention. The network (i.e. base station) may opportunistically enter a sleep mode in which it does not perform transmission/reception operations or operate in a low-power mode by performing transmission/reception operations using only a portion of a transceiver, and thus power consumption of the network may be reduced. In the present disclosure, methods for dynamic scaling of spatial elements will be described as methods for reducing power consumption in the spatial domain. Here, the spatial element may be used to refer to an antenna port (e.g. CSI-RS antenna port), TXRU, RF chain, physical antenna element, antenna panel, or the like.

As a method to scale spatial elements, muting some of the spatial elements may be considered. For example, the base station may dynamically mute or turn off some of TXRUs in a certain period and transmit signals using only unmuted or on-state TXRUs. In this case, the operation of muting a TXRU may include muting physical antenna element(s) to which the TXRU is mapped. Alternatively, the base station may dynamically mute some of physical antenna elements without muting TXRUs in a certain period and transmit signals using only the unmuted physical antenna elements. According to the above-described method, the base station may maximize a spatial multiplexing gain by driving all TXRUs in a period with high traffic (hereinafter referred to as 'first period'), and may operation in a low-power mode by driving a small number of TRXUs in a period with low traffic (hereinafter referred to as 'second period'). Accordingly, the power efficiency of the network can be increased without loss of transmission capacity.

As described above, CSI-RS antenna ports may be mapped to TXRUs. Therefore, when a TXRU muting operation is performed, CSI-RS antenna ports corresponding to muted TXRUs may also be muted depending on a mapping scheme or muting pattern. This will be described in detail through exemplary embodiments below.

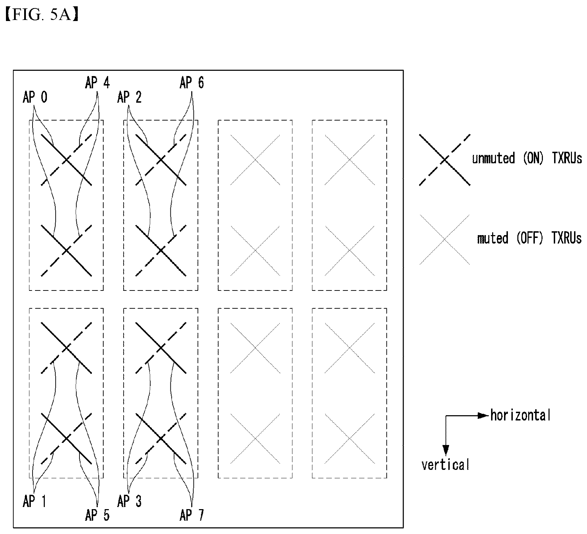

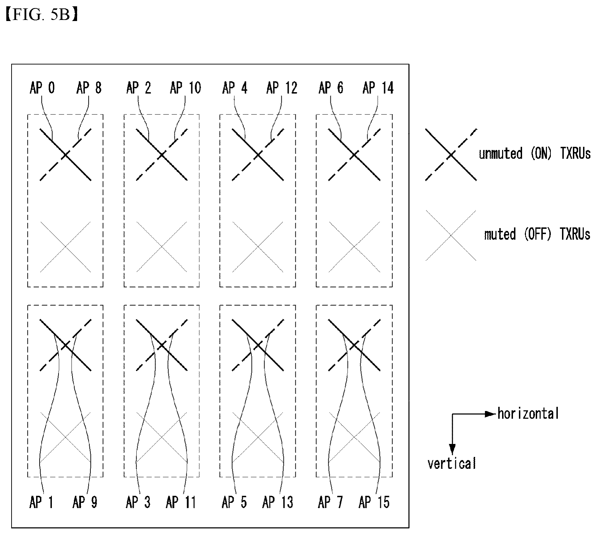

FIG. 5A is a conceptual diagram illustrating a first exemplary embodiment of a TXRU muting method, and FIG. 5B is a conceptual diagram illustrating a second exemplary embodiment of a TXRU muting method.

Referring to FIGS. 5A and 5B, like the first exemplary embodiment of FIG. 4, 32 TXRUs having a first polarization and a second polarization may be arranged in a two-dimensional space. In the present disclosure, "TXRUs being arranged in space" may mean "physical antenna elements to which the TXRUs are mapped being arranged in space". Additionally, each CSI-RS antenna port may be mapped to 2 TXRUs which have the same polarization and are adjacent in the vertical direction. In this case, some TXRUs may be muted by the method described above.

In the first exemplary embodiment of FIG. 5A, 16 TXRUs in the third and fourth rows may be muted. The base station may transmit signals using the remaining 16 TXRUs. In case of CSI-RS transmission, 8 CSI-RS antenna ports may be mapped to the remaining 16 TXRUs, and the CSI-RS antenna ports may be transmitted to the terminal. Compared to the first exemplary embodiment of FIG. 4 before the TXRU muting operation is applied, 8 CSI-RS antenna ports among 16 CSI-RS antenna ports may be considered as being muted. Although the number of CSI-RS antenna ports is scaled, assuming the same antenna virtualization scheme, a beam pattern formed by each CSI-RS antenna port may be maintained (i.e. TXRUs connected to each CSI-RS antenna port are maintained without being changed). The method described above may be referred to as 'first TXRU muting method'.

In the second exemplary embodiment of FIG. 5B, 16 TXRUs in the second and fourth rows may be muted. The base station may transmit signals using the remaining 16 TXRUs. In case of CSI-RS transmission, 16 CSI-RS antenna ports may be mapped to the remaining 16 TXRUs, and the CSI-RS antenna ports may be transmitted to the terminal. Compared to the first exemplary embodiment of FIG. 4 before the TXRU muting operation is applied, it can be confirmed that in case of the TXRU muting pattern, the number of CSI-RS antenna ports available for transmission is not affected by the TXRU muting. However, the number of TXRUs mapped to each CSI-RS antenna port is reduced from 2 to 1, and accordingly, even assuming the same antenna virtualization scheme, a beam pattern formed by each CSI-RS antenna port may be changed. The above-described method may be referred to as 'second TXRU muting method'.

Hereinafter, the adaptive scaling or muting method of CSI-RS antenna ports will be described in more detail.

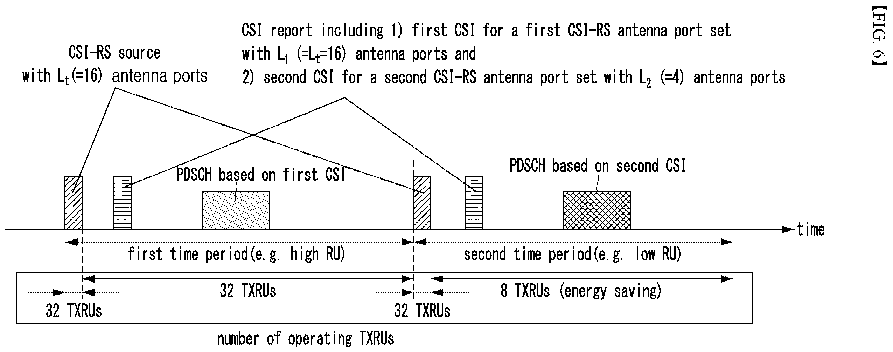

FIG. 6 is a conceptual diagram illustrating a first exemplary embodiment of a CSI reporting method based on a plurality of CSI-RS antenna port sets.

Referring to FIG. 6, the terminal may receive configuration information of CSI-RS resource(s) from the base station. A CSI-RS resource may consist of Lₜ=16 CSI-RS antenna ports. The CSI-RS resource may appear periodically and repeatedly.

According to a proposed method, the terminal may additionally receive first configuration information from the base station, and configure a plurality of (or more than one) CSI-RS antenna port sets based on the first configuration information. Here, the first configuration information may be configuration information of the CSI-RS antenna port set(s). As will be described later, the first configuration information may be replaced with codebook configuration information or may be regarded as codebook configuration information. Additionally, the first configuration information may be transmitted separately, and may be transmitted as being included in the configuration information of CSI-RS resource(s), or included in CSI report configuration information. Each CSI-RS antenna port set may be configured as at least a portion (i.e. subset) of the Lₜ=16 CSI-RS antenna ports. That is, multiple CSI-RS antenna port sets may be derived within the same CSI-RS resource. In the present exemplary embodiment, the terminal may configure a first CSI-RS antenna port set and a second CSI-RS antenna port set based on the first configuration information. The first CSI-RS antenna port set may include L₁=Lₜ=16 CSI-RS antenna ports, and the second CSI-RS antenna port set may include L₂=4 CSI-RS antenna ports. The L₂=4 CSI-RS antenna ports may be a portion of the Lₜ=16 CSI-RS antenna ports. For example, each CSI-RS antenna port set may be referred to as a CSI-RS sub-resource, CSI-RS resource sub-configuration, or the like, and may be configured in the terminal as a sub-parameter of the CSI-RS resource. In the present disclosure, each CSI-RS antenna port set (or subset) may correspond to each spatial element pattern. In addition, the above-mentioned plurality of CSI-RS antenna port sets configured by one CSI-RS resource is merely an exemplary embodiment, and as will be described later, a plurality of CSI-RS antenna port sets may be configured by a plurality of CSI-RS resources. In this case, each CSI-RS antenna port set may correspond to each CSI-RS resource. The plurality of CSI-RS resources may belong to the same CSI-RS resource set.

The terminal may receive CSI report configuration information from the base station and perform a CSI reporting operation. The terminal may report a plurality of CSIs to the base station. The plurality of CSIs may correspond to a plurality of CSI-RS antenna port sets (i.e. a plurality of spatial element patterns), respectively. In the present exemplary embodiment, a CSI report of the terminal may include a first CSI and a second CSI. The first CSI may be CSI calculated based on the first CSI-RS antenna port set, i.e. the received 16 CSI-RS antenna ports, and the second CSI may be CSI calculated based on the second CSI-RS antenna port set, i.e. L₂=4 CSI-RS antennas ports among the received 16 CSI-RS antenna ports. As described above, each of the first CSI and the second CSI may include CQI, PMI, RI, LI, CRI, SSBRI, beam quality measurements, etc. The above-described method may be referred to as (Method 100).

A plurality of CSIs may be transmitted to the base station based on one CSI report configuration. For example, a CSI report configuration may include multiple CSI report sub-configurations. Each CSI report sub-configuration may include configuration information for reporting each CSI derived based on each CSI-RS antenna port set. In other words, each CSI report sub-configuration may correspond to each CSI-RS antenna port set (or each spatial element pattern). A plurality of CSIs may be transmitted together through the same uplink transmission (e.g. PUCCH, PUSCH). The above-described method may be referred to as a first CSI reporting method or a multi-CSI reporting method. Alternatively, a plurality of CSIs may be transmitted to the base station based on a plurality of CSI report configurations. For example, each CSI report configuration may include configuration information for reporting each CSI derived based on each CSI-RS antenna port set. In this case, the plurality of CSIs may be transmitted through different uplink resources at different transmission timings. Alternatively, even in this case, the plurality of CSIs may be transmitted through the same uplink resource at the same transmission timing. The above-described method may be referred to as a second CSI reporting method or a single-CSI reporting method.

In the first CSI reporting method, the number of CSI report sub-configurations belonging to a CSI report configuration may be referred to as A. In addition, the number of CSI-RS antenna port sets (e.g. CSI-RS antenna port sets belonging to one CSI-RS resource or one CSI-RS resource set) configured for spatial element adaptation operations may be referred to as B. The CSI-RS resource or CSI-RS resource set may be associated with the CSI report configuration. In this case, each CSI report sub-configuration may correspond to one or up to one CSI-RS antenna port set, and generally A may have a value equal to or smaller than B. That is, a CSI report of the terminal may include a CSI report for each of all spatial element patterns configured in the terminal, or may include a CSI report for some of the spatial element patterns configured in the terminal. In an exemplary embodiment, A may be 1. This case may correspond to the second CSI reporting method. In an exemplary embodiment, B may be 1. This case may correspond to the conventional CSI-RS transmission method to which the CSI-RS antenna port adaptation technique is not applied.

The terminal may transmit all A CSI report(s) corresponding to A CSI report sub-configuration(s) to the base station. Alternatively, for a purpose of reducing uplink control information (UCI) overhead, the terminal may determine A1 CSI report sub-configuration(s) among the A CSI report sub-configuration(s), and transmit A1 CSI report(s) for the determined A1 CSI report sub-configuration(s) to the base station (where A1 is a natural number less than or equal to A). The A1 CSI report sub-configuration(s) may be determined based on configuration information received from the base station. The above-described CSI overhead reduction technique may or may not be applied depending on a periodicity of the configured CSI report. Additionally, the above-described CSI overhead reduction technique may be configured to the terminal based on a different signaling procedure depending on a periodicity of the configured CSI report. For example, the configuration information may be included in an RRC message, and may be transmitted as being included in CSI report configuration information including the CSI report sub-configurations, or may be transmitted along with the CSI report configuration information.

Additionally or alternatively, the A1 CSI report sub-configuration(s) may be dynamically indicated to the terminal based on a physical layer signaling procedure. The base station may indicate CSI report sub-configuration(s) to be reported by the terminal through DCI. For example, the DCI may be a group common DCI. That is, DCI including information on the CSI report sub-configuration(s) may be transmitted to a terminal group, and terminals receiving the DCI may change or maintain CSI reporting operations based on indication information included in the DCI. The indication information included in the group common DCI may be information common to all terminals that receive the group common DCI. Alternatively, the group common DCI may include a plurality of indication information for a plurality of terminals or a plurality of terminal groups (or subgroups) receiving the group common DCI. The plurality of indication information may correspond to different fields or different bits (or bit strings) within the same field. To monitor the group common DCI, a type 3 CSS set, group common RNTI, etc. may be configured by the base station to the terminal.

As another example, the DCI may be a scheduling DCI. For example, a CSI reporting operation for the CSI report sub-configuration(s) may be triggered aperiodically by the scheduling DCI. In this case, the scheduling DCI may include indication information regarding the CSI report sub-configuration(s), the terminal may determine the A1 CSI report sub-configuration(s) to report to the base station based on the indication information, and perform an operation of reporting aperiodic CSI report including corresponding A1 CSI(s). The indication information may further include other information necessary to perform the aperiodic CSI reporting operation. For example, the indication information may include an uplink TCI, uplink spatial relation information, etc. for forming a transmission beam of an uplink signal through which the aperiodic CSI report is to be transmitted. Additionally, the indication information may include information on an uplink resource in which the aperiodic CSI report is to be transmitted.

Alternatively, the CSI reporting operation for the CSI report sub-configuration(s) may be performed semi-persistently or periodically. The terminal may be indicated to activate or deactivate the CSI reporting operation by the base station through DCI (e.g. scheduling DCI) or MAC layer signaling (e.g. MAC CE). In this case, the DCI or the MAC layer signaling may include indication information for the CSI report sub-configuration(s) along with activation indication information of the CSI reporting operation, and the terminal may perform an operation of reporting semi-persistent CSI reports including the indicated CSI report sub-configuration(s). A predetermined time gap (e.g. slot offset and/or symbol offset) may be secured between a time (e.g. slot, symbol) at which the terminal performs a CSI report transmission operation reflecting the dynamically indicated CSI report sub-configuration(s) and a time (e.g. slot, symbol) at which the terminal receives the dynamic indication (e.g. DCI, MAC CE). As described above, if the CSI report sub-configuration corresponds to a CSI-RS antenna port set (or spatial element pattern), the above-described method may correspond to an operation to be described later, i.e. a method of dynamically indicating some CSI-RS antenna port set(s) through DCI.

As another method, the A1 CSI report sub-configuration(s) may be selected autonomously by the terminal. For example, the terminal may select A1 CSI report(s) (or corresponding CSI report sub-configuration(s)) that provides the highest channel qualities. The channel qualities may be determined according to metrics (e.g. CQI, etc.) defined in the technical specifications. In an exemplary embodiment, A1 may be 1. In this case, the first CSI reporting method may correspond to a CSI reporting operation including a single CSI, and UCI overhead can be maintained at a low level.

When the terminal reports multiple CSIs for multiple spatial element patterns using the above-described method, the multiple CSIs may be associated with each other. That is, a CSI for one spatial element pattern may be calculated based on a CSI for another spatial element pattern. For example, the terminal may report a first CSI and a second CSI for the first CSI-RS antenna port set and the second CSI-RS antenna port set to the base station, respectively. The first CSI and the second CSI may be reported based on the first CSI report sub-configuration and the second CSI report sub-configuration, respectively. In this case, the first CSI may be determined based on the second CSI. Alternatively, the second CSI may be determined based on the first CSI. For example, a first CQI derived based on the first CSI-RS antenna port set may be a differential CQI expressed as a difference value with a second CQI derived based on the second CSI-RS antenna port set. For another example, a first PMI or RI derived based on the first CSI-RS antenna port set may be a differential PMI or RI expressed as a difference value with a second PMI or RI derived based on the second CSI-RS antenna port set. In this case, the second CQI may have a value (or index) corresponding to a higher quality than the first CQI. Additionally, a CQI derived based on the second PMI and/or the second RI may have a value (or index) corresponding to a higher quality than a CQI derived based on the first PMI and/or the first RI. The differential CSI may be expressed with fewer bits, and the CSI payload can be reduced by the method described above. When the CSI is transmitted on a PUCCH, the size of a resource (e.g. the number of PRBs) to which the PUCCH is mapped may decrease as the total payload size of the CSI to be transmitted on the PUCCH decreases, and a PUCCH format therefor may also be changed. The above-described operation may be performed only when the first CSI reporting method is used. That is, the plurality of CSIs may correspond to CSI report sub-configurations belonging to one CSI report configuration.

As another method for reducing CSI overhead, the terminal may report A2 CSI(s) representing the A CSI report sub-configuration(s) or the selected A1 CSI report sub-configuration(s) to the base station. A2 may be a natural number equal to or less than A or A1. The A2 CSI(s) may be calculated based on the A CSI report sub-configuration(s) or the selected A1 CSI report sub-configuration(s). Alternatively, the terminal may select A2 CSI report sub-configuration(s) from among the A or A1 CSI report sub-configuration(s), and may calculated the A2 CSI(s) based on the selected A2 CSI report sub-configuration(s).

In an exemplary embodiment, A2 may be 1. For example, the terminal may derive one CSI (e.g. CQI, PMI, RI, CRI, SSBRI, and/or L1-RSRP) for the A or A1 CSI report sub-configuration(s), and may report the one CSI to the base station. The one CSI may be a value derived based on one CSI report sub-configuration. For example, the terminal may calculate CSI for each of a plurality of CSI report sub-configurations, select one CSI (e.g. optimal CSI) from among the calculated CSIs, and report the selected one CSI. The one CSI may mean a channel quality corresponding to the optimal spatial element pattern (i.e. the optimal CSI-RS antenna port muting pattern). Alternatively, the one CSI may be a value (e.g. jointly coded value) derived based on a plurality of CSI report sub-configurations (i.e. a plurality of CSI-RS antenna port muting patterns). The CSI may include information regarding which CSI report sub-configuration the CSI is based on. For example, the information may include an index (or number) of the CSI report sub-configuration on which the CSI is based. For example, the information may be referred to as a sub-configuration indicator, CSI report sub-configuration indicator, etc. The information may be distinguished from a CRI. In other words, a CRI refers to information on a CSI-RS resource (e.g. CSI-RS resource index) that the terminal wishes to selectively report within a given sub-configuration, while the sub-configuration indicator refers to information on a sub-configuration that the terminal wishes to selectively report. In general, when A2 CSIs are reported, A2 sub-configuration indicator(s) corresponding thereto may be reported together.

In another exemplary embodiment, A2 may be A1. For example, the terminal may calculate A1 CSI(s) based on the configured A CSI report sub-configuration(s), or may select A1 CSI report sub-configuration(s) among the A CSI report sub-configuration(s), calculate A1 CSI(s) based on the selected A1 CSI report sub-configuration(s), and report the A1 CSI(s) to the base station.

In the above-described method, the number of reported CSIs may be different for each CSI type. The terminal's CSI report for A or A1 CSI report sub-configuration(s) may include A2 specific CSI type(s) and A or A1 other CSI type(s). For example, the CSI report of the terminal may include one CQI, and include other CSI types (e.g. PMI, RI, CRI, SSBRI, etc.) as many as the number of CSI report sub-configuration(s), i.e. A or A1. The one CQI may be an (optimal) CQI selected from a plurality of CQIs derived for the plurality of CSI report sub-configuration(s).

The above-described CSI overhead reduction technique may also be applied when the terminal reports multiple CSIs based on the second CSI reporting method. For example, the terminal may be configured with a first CSI report configuration and a second CSI report configuration. A first CSI calculated based on the first CSI-RS antenna port set may be reported according to the first CSI report configuration, and a second CSI calculated based on the second CSI-RS antenna port set may be reported according to the second CSI report configuration. The transmission timings (e.g. transmission slots) and/or transmission resources (e.g. PUCCH, PUSCH) of the first CSI and the second CSI may coincide.

In this case, CSI reporting operations for the first CSI report configuration and the second CSI report configuration may be performed based on the CSI overhead reduction technique described above. For example, the first CSI may be determined based on the second CSI. For another example, one of the first CSI and the second CSI may be selected, and the selected CSI may be reported to the base station. Alternatively, one CSI (e.g. unified CSI) may be jointly calculated based on both the first CSI report configuration and the second CSI report configuration, and the one CSI may be reported to the base station. In this case, the plurality of CSI report configurations may be configured to have the same time characteristics. For example, if the first CSI report configuration is configured periodically, semi-persistently, or aperiodically, the second CSI report configuration may also be configured periodically, semi-persistently, or aperiodically. The terminal may not expect to be indicated to apply the above-described CSI overhead reduction technique to multiple CSI report configurations with different time characteristics.

In case of an aperiodic CSI report, DCI that triggers the aperiodic CSI report may include information (e.g. CSI report configuration index(es)) indicating CSI report configuration(s) to be processed and transmitted together, and the terminal may perform CSI reporting operations based on the above-described method for the indicated CSI report configuration(s). In case of a semi-persistent CSI report, a DCI or MAC CE indicating to activate the semi-persistent CSI report may include information (e.g. CSI report configuration index(es)) indicating CSI report configuration(s) to be processed and transmitted together, and the terminal may perform CSI reporting operations based on the above-described method for the indicated CSI report configuration(s).

Meanwhile, a reporting timing (e.g. transmission slot) of the first CSI may not match a reporting timing (e.g. transmission slot) of the second CSI. Even in this case, the above-described CSI processing and reporting operations may be performed in the same manner. However, a timing for transmitting the finally determined CSI to the base station may be determined by rules predefined in the technical specifications. For example, the final CSI may be transmitted in one (e.g. a later slot or an earlier slot) of the transmission slot of the first CSI and the transmission slot of the second CSI. For another example, the final CSI may be transmitted in a slot other than the transmission slot of the first CSI and the transmission slot of the second CSI. Considering a time required to calculate the final CSI, that slot may be a slot that is not earlier than the transmission slot of the first CSI and the transmission slot of the second CSI. The base station may configure, to the terminal, a slot in which the final CSI is to be transmitted. For example, a slot offset between the slot in which the final CSI is to be transmitted and the transmission slot of the first CSI or second CSI may be indicated to the terminal.

Meanwhile, when the terminal calculates multiple CSIs for multiple spatial element patterns and reports them to the base station, CSI calculation complexity may increase. The capability of the terminal's CSI calculation may be indicated by CSI processing units (CPUs). The terminal may simultaneously process up to N_CPU CSIs at one time (e.g. a specific symbol), and report N_CPU to the base station as the terminal's capability. In this case, it can be said that the terminal has N_CPU CPUs for CSI reporting operations. In general, one CSI-RS resource referenced by a CSI report may occupy one CPU.

When the above-described network power reduction method is used, one CSI-RS resource may be referenced by one CSI report configuration, and the one CSI report configuration may be associated with the A or selected A1 CSI report sub-configurations. In this case, the one CSI-RS resource may be referenced by the A or selected A1 CSI report sub-configurations belonging to one CSI report configuration. The terminal may calculate A1 (or A2 further selected by the above-described method) CSIs corresponding to different spatial element patterns (e.g. different CSI-RS antenna port sets) based on the one CSI-RS resource. Therefore, the CSI calculation complexity of the terminal based on the one CSI-RS resource may correspond to the CSI calculation complexity based on the A1 (or A2) CSI-RS resources. Accordingly, the one CSI-RS resource may occupy A1 (or A2) CPUs. Alternatively, the one CSI-RS resource may be counted A1 times. Alternatively, the one CSI-RS resource may be regarded as A1 (or A2) active CSI-RS resources. Alternatively, the one CSI-RS resource may be regarded as Ar active CSI-RS resources. Ar may be determined to be one of value(s) between 1 and A1 (or A2). In exemplary embodiments, Ar may be a natural number.

Additionally, the terminal's CSI calculation complexity may be limited to the number of active CSI-RS antenna ports. In the case described above, the number of active CSI-RS antenna ports for the one CSI-RS resource may be regarded as the total number of CSI-RS antenna ports corresponding to the A1 (or A2) CSI report sub-configurations referring to the one CSI-RS resource. That is, one CSI-RS antenna port constituting the CSI-RS resource may be counted redundantly. For example, under the above configuration, one CSI-RS antenna port constituting the CSI-RS resource may correspond to the number of A1 (or A2) active CSI-RS antenna ports. The terminal may transmit information on the number of active CSI-RS antenna ports that it can simultaneously process at one time to the base station as capability information of the terminal.

If the number K of CPUs configured to be processed by the terminal at a certain time (e.g. a certain symbol) exceeds N_CPU, the terminal may not calculate or report CSIs for the excess portion to the base station. When the K CPUs include CPUs for the above-described CSI-RS resource, the terminal may select some CSI report sub-configurations according to a priority rule from among the plurality of CSI report sub-configurations referring to the CSI-RS resource, and perform CSI reporting operations for the selected CSI report sub-configuration(s). In this case, CSI reporting operations for the remaining CSI report sub-configuration(s) may be omitted. For example, a higher priority may be assigned to a CSI report sub-configuration whose index is lower (or higher). According to the above-described operation, the terminal may report only some of a plurality of CSIs associated with the same CSI-RS resource to the base station. The plurality of CSIs may correspond to the plurality of CSI report sub-configurations, respectively.

Meanwhile, a plurality of CSI-RS resources may be referenced by one CSI report configuration, and CSI for one CSI-RS resource among the plurality of CSI-RS resources and an ID (i.e. CSI-RS resource indicator (CRI)) of the one CSI-RS resource may be reported from the terminal to the base station. Likewise, each CSI-RS resource may be associated with a plurality of CSI report sub-configurations. Even in the case, the CSI reporting operation of the terminal within its CSI processing capability may be performed based on priorities between the CSI report sub-configurations, and the priorities may be assigned in ascending order or descending order of indexes of the CSI report sub-configurations. When the number of CSI report sub-configurations and the number of CSI-RS resources associated with the CSI report sub-configurations are P and Q, respectively, the number of CPUs corresponding to the CSI reporting operations may be P*Q. When the number of CSI report sub-configurations selected by priorities is P1, the corresponding CPUs may be reduced to P1*Q. The terminal may sequentially include CSI report sub-configurations one by one in measurement and reporting targets based on the CSI report sub-configuration indexes until P1*Q does not exceed N_CPU.

In the case described above, that is, when each CSI report sub-configuration is associated with a plurality of CSI-RS resources, the terminal may select one CSI-RS resource associated with each CSI report sub-configuration, and may report CSI for the selected CSI-RS resource to the base station. Here, depending on a TXRU muting scheme, all CSI report sub-configurations may be associated with the same CSI-RS resources, or each CSI report sub-configuration may be associated with different CSI-RS resources. In this case, the CSI may include a CRI, and the CRI may include information (e.g. index) indicating the selected CSI-RS resource. If the number of sub-configuration(s) configured or activated for one CSI report is A (or A1), the number of reported CSIs may also be A (or A1). In this case, A (or A1) CRIs corresponding to the A (or A1) sub-configurations may all be the same. That is, the terminal may select a common CSI-RS resource for a plurality of sub-configurations, and calculate and report CSI for the selected CSI-RS resource for each sub-configuration. In this case, a CRI corresponding to the common CSI-RS resource may be included and transmitted in each CSI. That is, the CRI may be transmitted repeatedly A times (or A1 times). Alternatively, to reduce a CSI payload, the CRI may be transmitted once without redundancy. In this case, the CRI may be included in a CSI for one sub-configuration. The one sub-configurations may be predefined in the technical specifications. For example, the CRI may be transmitted included in a CSI for the sub-configuration with the lowest (or highest) sub-configuration index. The CRI may be a CSI of high priority or importance, and accordingly, it may be considered as a payload of a CSI part 1.

As another method, A (or A1) CRIs corresponding to the A (or A1) sub-configurations may be determined independently of each other. That is, the terminal may select CSIs for different CSI-RS resources for a plurality of sub-configurations and report them to the base station. According to the above-described method, a CSI with the highest channel quality and the corresponding CSI-RS resource may be selected by the terminal for each CSI report sub-configuration, and information thereon may be shared with the base station and used for scheduling.

In (Method 100), the base station may transmit CSI-RS antenna ports that constitute CSI-RS antenna port subsets among the CSI-RS antenna ports that constitute the CSI-RS resource, that is, at least CSI-RS antenna ports required for CSI calculation of the terminal. If there are remaining CSI-RS antenna ports that the terminal does not receive (or does not actually use even if received), they do not necessarily need to be transmitted. In the present exemplary embodiment, since the first CSI-RS antenna port set includes all CSI-RS antenna ports constituting the CSI-RS resource, the base station may transmit all of Lₜ (=16) CSI-RS antenna ports in the CSI-RS resource of each cycle. The terminal may receive all of the Lₜ (=16) CSI-RS antenna ports and calculate the first CSI and the second CSI.

The base station may perform an adaptive downlink scheduling operation based on the plurality of CSIs reported from the terminal. Referring to FIG. 6, the base station may transmit a PDSCH using a plurality of TXRUs (e.g. 32 TXRUs) based on the first CSI in a first time period with high traffic. The downlink transmission performance can be maximized in the first time period. Additionally, the base station may transmit a PDSCH using a small number of TXRUs (e.g. 4 TXRUs) based on the second CSI in a second time period with low traffic. The network power efficiency can be increased in the second time period. According to (Method 100), unlike a data channel transmission period, the number of TXRUs used in the CSI-RS transmission period (e.g. symbol(s) in which the CSI-RS is transmitted, slot(s) in which the CSI-RS is transmitted, etc.) may be fixed. In the present exemplary embodiment, the base station may transmit Lₜ = 16 CSI-RS antenna ports in a CSI-RS resource of each cycle, and accordingly, the corresponding 32 TXRUs may operate in the CSI-RS transmission period.

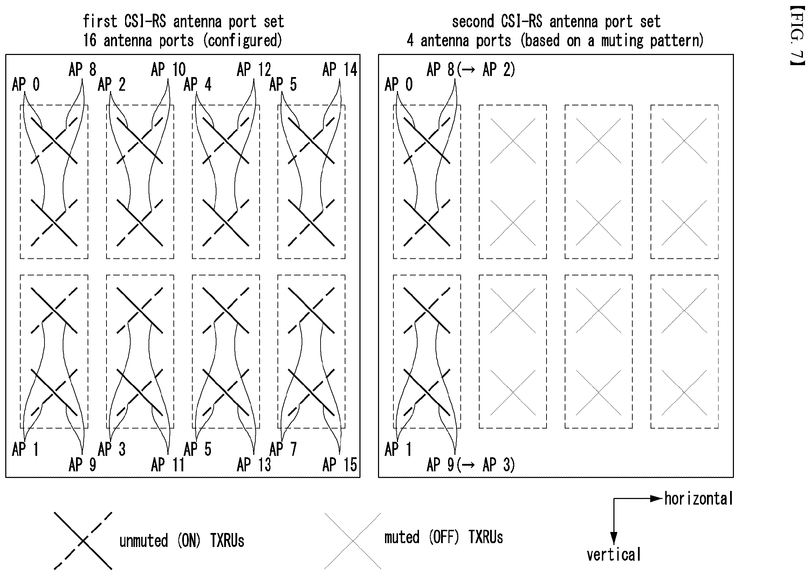

FIG. 7 is a conceptual diagram illustrating a first exemplary embodiment of a method for configuring a plurality of CSI-RS antenna port sets.

In the present exemplary embodiment, a mapping operation between CSI-RS antenna ports, TXRUs, and physical antenna elements may follow the operation described in the first exemplary embodiment of FIG. 4. Referring to FIG. 7, a first CSI-RS antenna port set may include all L₁=Lₜ=16 CSI-RS antenna ports, and these may be mapped to all 32 TXRUs. For example, the terminal may receive the 16 CSI-RS antenna ports in the 16 REs shown in FIG. 3, and derive a first CSI based on a CSI codebook corresponding to the received 16 CSI-RS antenna ports. The CSI codebook may be a two-dimensional (2D) codebook with a size of (N1, N2)=(4, 2) or (N1, N2, P)=(4, 2, 2). Here, N1, N2, and P may mean the number of antenna ports in a first direction (e.g. horizontal direction), the number of antenna ports in a second direction (e.g. vertical direction), and the number of polarizations (e.g. P=2), respectively. The first CSI may be derived based on the indexes (i.e. indexes 0 to 15 shown in FIG. 7) assigned to the CSI-RS antenna ports according to the above-described rules. The 2D codebook may be a codebook composed of a Kronecker product of two matrixes. The two matrixes may be matrixes composed of codewords corresponding to the first direction and the second direction, and the size and elements of each matrix may be determined based on N1 and N2.

Referring to FIG. 7, a second CSI-RS antenna port set may include L₂ = 4 CSI-RS antenna ports mapped to 8 TXRUs in the first column. The second CSI-RS antenna port set may be determined based on the first configuration information described above. For example, the first configuration information may be information on a CSI-RS antenna port muting pattern. In the present disclosure, the CSI-RS antenna port muting pattern may be used as a term referring to a set of CSI-RS antenna ports that are muted (or not muted) or information indicating the set. In the present exemplary embodiment, the first configuration information may indicate 12 CSI-RS antenna ports mapped to TXRUs in the three right columns (i.e. second, third, and fourth columns). Based on the CSI-RS antenna port muting pattern, the terminal may configure the second CSI-RS antenna port set with the remaining four CSI-RS antenna ports that do not belong to the CSI-RS antenna port muting pattern. For another example, the first configuration information may be information on a CSI-RS antenna port set (or subset). The first configuration information may include unmuted CSI-RS antenna ports constituting a CSI-RS antenna port set, or information indicating them. In the present exemplary embodiment, the first configuration information may indicate four CSI-RS antenna ports mapped to TXRUs in one left column (i.e. first column). The four CSI-RS antenna ports may be CSI-RS antenna ports 0, 1, 8, and 9.

The terminal may receive the four CSI-RS antenna ports and derive the second CSI based on a CSI codebook corresponding to the four received CSI-RS antenna ports. The CSI codebook may be a 2D codebook with a size of (N1, N2)=(1, 2) or (N1, N2, P)=(1, 2, 2). Compared to the codebook applied to the first CSI, the size of the codebook is reduced to 1 in the first direction (e.g. horizontal direction) by the muting.

If the CSI-RS antenna port set configured by the above-described method is smaller in size than the CSI-RS antenna ports constituting the CSI-RS resource, CSI-RS antenna port indexes may be re-assigned for the CSI-RS antenna port set. For example, the above-described numbering rule (i.e. second direction → first direction → polarization direction) may be applied equally to the CSI-RS antenna ports constituting the CSI-RS antenna port set. In the present exemplary embodiment, the indexes of the CSI-RS antenna ports 0, 1, 8, and 9 included in the second CSI-RS antenna port set may be changed to 0, 1, 2, and 3 according to the above rule. Based on the changed (or reassigned) indexes, the terminal may derive the second CSI, which is the corresponding CSI. Even if the indexes of the CSI-RS antenna ports are reassigned, locations of resources to which the CSI-RS antenna ports are mapped may not change. That is, mapping or de-mapping of the CSI-RS antenna ports may be performed based on the indexes before being changed (e.g. indexes assigned based on all CSI-RS antenna ports constituting the CSI-RS resource). Even if the CSI-RS antenna ports 8 and 9 are re-assigned to indexes 2 and 3, they may still be transmitted at the locations originally occupied by the CSI-RS antenna ports 8 and 9 among the 16 CSI-RS antenna ports (i.e. 4 REs corresponding to the CDM group 2 of FIG. 3).

In (Method 100), the above-described muting may be virtual muting. That is, the muted CSI-RS antenna ports may be only excluded from the corresponding CSI-RS antenna port set and/or CSI, and may actually be transmitted from the base station to the terminal. In the present embodiment, the 12 CSI-RS antenna ports muted for configuring the second CSI-RS resource set may be unmuted CSI-RSs from the perspective of the first CSI-RS resource set, and thus the 12 CSI-RS RS antenna ports may be transmitted to the terminal. However, for a certain CSI-RS resource, if a muted CSI-RS antenna port is a CSI-RS muted for all CSI-RS antenna port sets configured for the terminal, the terminal may not receive the CSI-RS antenna port.

For one CSI-RS resource, one or more CSI-RS antenna port sets may be configured. Multiple CSI-RS antenna port sets may be distinguished by different indexes. Configuration information of CSI-RS resources may include first configuration information corresponding to each CSI-RS antenna port set. Like the first CSI-RS resource set in the above-described exemplary embodiments, a specific CSI-RS antenna port set may be composed of all CSI-RS antenna ports constituting the CSI-RS resource. That is, a specific CSI-RS antenna port set may be the entire set. In this case, a corresponding muting pattern may not include CSI-RS antenna ports. That is, the corresponding muting pattern may consist of 0 CSI-RS antenna ports. An index of the specific CSI-RS antenna port set may be predefined in the technical specifications. For example, the index may be 0.

A CSI-RS antenna port set may be determined based on a structure (or size) of an associated CSI codebook. For example, when CSI is derived by the above-described 2D codebook, the CSI-RS antenna port set may be determined based on information on antenna port(s) constituting the first direction (e.g. horizontal direction) and/or information on antenna port(s) constituting the second direction (e.g. vertical direction). That is, the above information may be included in the first configuration information. The information on the antenna port(s) constituting the first direction may be information related to N1, which is the size of the codebook in the first direction, and the information on the antenna port(s) constituting the second direction may be information related to N2, which is the size of the codebook in the second direction. Additionally or alternatively, the first configuration information may be determined based on information on antenna port(s) constituting the third direction (or polarization direction), and the information may be information related to P, which is the size of the codebook in the third direction. In an exemplary embodiment, P may be 2. Alternatively, P may be a natural number of 2 or more. The above-described method may be referred to as (Method 110).

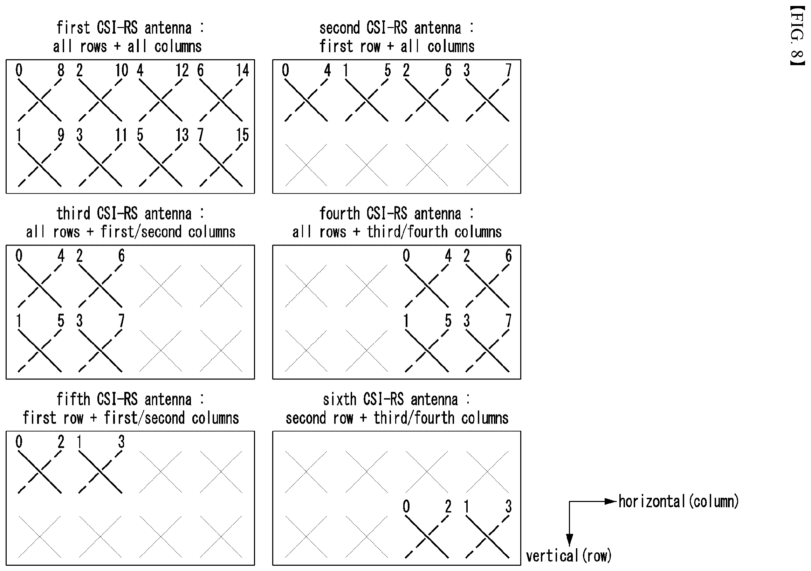

FIG. 8 is a conceptual diagram illustrating a second exemplary embodiment of a method for configuring a plurality of CSI-RS antenna port sets.

Referring to FIG. 8, the terminal may be configured by the base station to receive a CSI-RS resource including 16 CSI-RS antenna ports. In the present exemplary embodiment, a mapping operation between CSI-RS antenna ports, TXRUs, and physical antenna elements may follow the operation described in the first exemplary embodiment of FIG. 4. That is, the CSI-RS antenna ports may be arranged in a first direction (e.g. vertical direction), a second direction (e.g. horizontal direction), and a polarization direction. Additionally, the terminal may be configured with a CSI-RS antenna port set (i.e. subset) composed of some or all of the 16 CSI-RS antenna ports for CSI reporting on a scaled CSI-RS resource. A first CSI-RS antenna port set may include all of the 16 CSI-RS antenna ports. On the other hand, each of second to sixth CSI-RS antenna port sets may be configured as a part of the 16 CSI-RS antenna ports. The remaining CSI-RS antenna ports not included in the CSI-RS antenna port sets may be regarded as being muted. The terminal may calculate CSI(s) for the CSI-RS antenna port set(s) and report the calculated CSI(s) to the base station. The CSI(s) may be calculated based on 2D codebook(s).

When expressing the CSI-RS antenna ports constituting the first direction (e.g. horizontal direction) and the second direction (e.g. vertical direction) as a 2D matrix, a location of the CSI-RS antenna port in the respective directions may expressed as a column index and a row index. In the above-described exemplary embodiment, the second CSI-RS antenna port set may be composed of 8 CSI-RS antenna ports corresponding to a row 1 and all columns, and the fourth CSI-RS antenna port set may be composed of 8 CSI-RS antenna ports corresponding to all rows and columns 3 and 4.

According to (Method 110), a CSI-RS antenna port set may be indicated. The first configuration information may include information indicating column(s) corresponding to the CSI-RS antenna port(s) constituting the first direction and/or information indicating row(s) corresponding to the CSI-RS antenna port(s) constituting the second direction. Alternatively, the first configuration information may include information indicating column(s) corresponding to the CSI-RS antenna port(s) muted in the first direction and/or information indicating row(s) corresponding to the CSI-RS antenna port(s) muted in the second direction.

As a specific method, the information may be expressed as a set of row index(es) and/or a set of column index(es). According to the above-described method, configuration information of the first CSI-RS antenna port set may include a row index set {0, 1} and a column index set {0, 1, 2, 3}, configuration information of the second CSI-RS antenna port set may include a row index set {0} and a column index set {0, 1, 2, 3}, and configuration information of the fourth CSI-RS antenna port set may include a row index set {0, 1} and a column index set {2, 3}. Alternatively, configuration information of the first CSI-RS antenna port set may include an index set Φ of muted rows and an index set Φ of muted columns, configuration information of the second CSI-RS antenna port set may include an index set {1} of muted rows and an index set Φ of muted columns, and configuration information of the fourth CSI-RS antenna port set may include an index set Φ of muted rows and an index set {0, 1} of muted columns. Here, Φ may mean an empty set.

As another method, the information may be expressed as (index of a start row, index of an end row) and/or (index of a start column, index of an end column). According to the above-described method, configuration information of the first CSI-RS antenna port set may include '(start row, end row) = (0, 1)' and '(start column, end column) = (0, 3)', configuration information of the second CSI-RS antenna port set may include '(start row, end row) = (0, 0) and (start column, end column) = (0, 3)', and configuration information of the fourth CSI-RS antenna port set may include '(start row, end row)=(0, 1) and (start column, end column)=(2, 3)'. Alternatively, configuration information of the first CSI-RS antenna port set may include information indicating that there is no muted row (e.g. '(start row, end row) = (0, 0)') and information indicating that there is no muted column (e.g. '(start column, end column)=(0, 0)), configuration information of the second CSI-RS antenna port set may include information indicating muted rows (e.g. '(start row, end row)=(1, 1)') and information indicating that there is no muted column (e.g. '(start column, end column) = (0, 0)'), and configuration information of the fourth CSI-RS antenna port set may include information indicating that there is no muted row (e.g. '(start row, end row)=(0, 0)') and information indicating muted columns (e.g. '(start column, end column)=(0, 1)').

As yet another method, the information may be expressed as (index of a start row, number of consecutive rows) and/or (index of a start column, number of consecutive columns). According to the above-described method, configuration information of the first CSI-RS antenna port set may include '(start row, number of rows) = (0, 2)' and '(start column, number of columns) = (0, 4)', configuration information of the second CSI-RS antenna port set may include '(start row, number of rows) = (0, 1)' and '(start column, number of columns) = (0, 4)', and configuration information of the fourth CSI-RS antenna port set may include '(start row, number of rows) = (0, 2)' and '(start column, number of columns) = (2, 2)'. Alternatively, configuration information of the first CSI-RS antenna port set may include information indicating that there is no muted rows (e.g. '(start row, number of rows) = (0, 0) or (A, 0)', A is an arbitrary configurable value) and information indicating that there is no muted column (e.g. '(start column, number of columns) = (0, 0) or (A, 0)'), configuration information of the second CSI-RS antenna port set may include information indicating muted rows (e.g. '(start row, number of rows)=(1, 1)') and information indicating that there is no muted column (e.g. '(start column, number of columns)=(0, 0) or (A, 0)'), and configuration information of the fourth CSI-RS antenna port set may include information indicating that there is no muted row (e.g. '(start row, number of rows) = (0, 0) or (A, 0)') and information indicating muted columns (e.g. '(start column, number of columns) = (0, 2)').

According to the above-described method, all consecutive CSI-RS antenna ports in each domain may be indicated by the first configuration information. That is, the first to sixth CSI-RS antenna port sets may be indicated by the first configuration information. Meanwhile, there may be CSI-RS antenna port sets that provide the same CSI measurement effects within one CSI-RS resource. In the above-described exemplary embodiment, the third CSI-RS antenna port set and the fourth CSI-RS antenna port set may provide the same effects, and the fifth CSI-RS antenna port set and the sixth CSI-RS antenna port set may provide the same effects. In this case, allowing both configuration of the third CSI-RS antenna port set and configuration of the fourth CSI-RS antenna port set, or both configuration of the fifth CSI-RS antenna port set and configuration of the sixth CSI-RS antenna port set may cause unnecessary redundancy, and signaling overhead of the first configuration information may increase.

As a method to solve the above-described problem, a method of fixing a location of a start CSI-RS antenna port in each transmission direction may be applied. For example, the locations of the CSI-RS antenna ports constituting each CSI-RS antenna port set may start from the first row 1 (i.e. row with an index 0) in the second direction (e.g. vertical direction) and may start from the first column (i.e. column with an index 0) in the first direction (e.g. horizontal direction). Additionally, each CSI-RS antenna port set may include at least CSI-RS antenna port corresponding to the first row and the first column. The CSI-RS antenna port set(s) consisting of CSI-RS antenna ports that satisfy the above-described condition may be configured in the terminal. In the above-described exemplary embodiment, the first, second, third, and fifth CSI-RS antenna port sets may satisfy the above-described condition and may be configured in the terminal for CSI measurement and reporting. However, since each of the fourth and sixth CSI-RS antenna port sets does not include a CSI-RS antenna port in the first row and the first column, they may not satisfy the above-described condition and may be considered as invalid configurations.

According to the above-described method, the first configuration information may be expressed as an index of an end row and/or an index of an end column. That is, the first configuration information may not include an index of a start row or an index of a start column. According to the above-described method, configuration information of the first CSI-RS antenna port set may include '(end row) = (1) and (end column) = (3)', and configuration information of the second CSI-RS antenna port set may include '(end row)=(0) and (end column)=(3)'. Alternatively, configuration information of the first CSI-RS antenna port set may include information indicating that there is no muted row (e.g. '(end row)=(0)') and information indicating that there is no muted column (e.g. '(end column)=(0)'), and configuration information of the second CSI-RS antenna port set may include information indicating muted rows (e.g. '(end row)=(1)') and information indicating that there is no muted column (e.g. '(end column)=(0)'). On the other hand, the fourth CSI-RS antenna port set and the sixth CSI-RS antenna port set may be considered as invalid configurations.

As another method, the first configuration information may be expressed as the number of consecutive rows and/or the number of consecutive columns. That is, the first configuration information may not include an index of a start row or an index of a start column. According to the above-described method, configuration information of the first CSI-RS antenna port set may include '(number of rows) = (2) and (number of columns) = (4)', and configuration information of the second CSI-RS antenna port set may include '(number of rows)=(1) and (number of columns)=(4)'. Alternatively, configuration information of the first CSI-RS antenna port set may include information indicating that there is no muted row (e.g. '(number of rows) = (0)') and information indicating that there is no muted column (e.g. '(number of columns)=(0)'), and configuration information of the second CSI-RS antenna port set may include information indicating muted rows (e.g. '(number of rows)=(1)') and information indicating that there is no muted column (e.g. '(number of columns)=(0)'). On the other hand, the fourth CSI-RS antenna port set and the sixth CSI-RS antenna port set may be considered as invalid configurations.

In the above-described method, the number of rows and the number of columns may respectively correspond to N2 and N1, which are configuration information indicating the size of the 2D codebook. In other words, the first configuration information may include N1 and N2, which are configuration information indicating the size of the 2D codebook. For example, configuration information of the first CSI-RS antenna port set may include (N1, N2)=(4, 2) or (N1, N2, P)=(4, 2, 2), and configuration information of the second CSI-RS antenna port set may include (N1, N2)=(1, 2) or (N1, N2, P)=(1, 2, 2). Alternatively, configuration information of the first CSI-RS antenna port set may include information indicating that there is no muted row and no muted column (e.g. (N1, N2) = (0, 0) or (N1, N2, P)=(0, 0, 2)), and configuration information of the second CSI-RS antenna port set may include information indicating the number of muted rows (e.g. N2=2) and information indicating that there is no muted column (e.g. N1=0 or (N1, N2, P)=(0, 2, 2)). Likewise, the fourth CSI-RS antenna port set and the sixth CSI-RS antenna port set may be considered as invalid configurations.

According to the above-described method, the first configuration information may include configuration information of the codebook (e.g. 2D codebook) associated with the CSI-RS antenna port set. Alternatively, the first configuration information may be replaced with the codebook configuration information or may be regarded as the codebook configuration information. Additionally, the first configuration information may be transmitted to the terminal as being included in CSI report configuration information rather than CSI-RS resource configuration information. For example, the first configuration information may be included in CSI report configuration information or CSI report sub-configuration information associated with the CSI-RS antenna port set. In this case, the first configuration information may be expressed in form of codebook configuration information. The terminal may know (or, identify) CSI-RS antenna port(s) constituting the CSI-RS antenna port set based on the codebook configuration information (e.g. N1 and N2) included in the CSI report configuration or CSI report sub-configuration. In this case, the CSI-RS resource configuration may not additionally include the first configuration information for the CSI-RS antenna port set. Alternatively, the CSI-RS resource configuration may include second configuration information other than the first configuration information (e.g. codebook configuration information, N1 and N2) included in the CSI report configuration. For example, the second configuration information may include information on the number of CSI-RS antenna ports constituting the CSI-RS antenna port set. The terminal may identify a CSI-RS antenna port subset using only the first configuration information included in the CSI report configuration, or may identify a CSI-RS antenna port subset using both the first configuration information included in the CSI report configuration and the second configuration information included in the CSI-RS resource configuration. As another example, both the first configuration information and the second configuration information may be included in the CSI report configuration information. Alternatively, both the first configuration information and the second configuration information may be included in the CSI-RS resource configuration information.

According to exemplary embodiments, a first CSI report configuration may be associated with a first CSI-RS resource. Alternatively, the first CSI report configuration may reference the first CSI-RS resource. The first CSI-RS resource may be composed of C CSI-RS antenna ports and may be mapped to D REs based on a CSI-RS resource mapping rule configured in the terminal. For example, D may be equal to C. The first CSI report configuration may include codebook configuration information corresponding to the C CSI-RS antenna ports constituting the first CSI-RS resource. The codebook configuration information may include information on the size of the codebook (N1, N2). Here, N1 and N2 may be natural numbers that satisfy 2*N1*N2 = C. The codebook corresponding to the CSI report configuration may be referred to as a parent codebook for convenience.

The first CSI report configuration may be associated with a plurality of (e.g. A) CSI report sub-configurations. The a-th CSI report sub-configuration may include information on C(a) CSI-RS antenna ports, which is a subset of C CSI-RS antenna ports constituting the first CSI-RS resource, and/or codebook configuration information corresponding to the C(a) CSI-RS antenna ports (where 1≤a≤A). The codebook configuration information may include information on the size of the codebook (N1(a), N2(a)). Here, N1(a) and N2(a) may be natural numbers that satisfy 2*N1(a)*N2(a) = C(a). The codebook corresponding to each CSI report sub-configuration may be referred to as a child codebook for convenience.

There may be an association between the parent codebook and each child codebook. According to the above-described concepts, an inclusion relationship may be established between the CSI-RS resource (i.e. antenna ports constituting the CSI-RS resource) and the CSI-RS antenna port set (i.e. a subset of the antenna ports). Based on this, the size of each dimension of the child codebook may be determined to be a value that does not exceed the size of each dimension of the parent codebook. In other words, for a given a, a relationships N1(a) ≤ N1 and N2(a) ≤ N2 may be established.

The codebook configuration information described above may additionally other information in addition to N1 and N2 For example the codebook inchide configuration information may include the number of panels to which the CSI-RS antenna ports are mapped. The terminal may derive CSI using only some of codewords in the codebook. Codebook subset restriction information indicating a set of codewords that the terminal uses or does not use for CSI reporting may be included in the codebook configuration information.

The above-described method may be applied to a type 1 CSI codebook. The type 1 CSI codebook may include a single-panel codebook and a multi-panel codebook. In case of a single panel codebook, the size of the codebook may be given by N1 and N2. In case of a multi-panel codebook, the size of the codebook may be given by N1, N2, and the number of panels (or the number of coherence groups configured by antenna panels) (e.g. Ng). In case of a multi-panel codebook, if the number P of polarizations is additionally considered as described above, the size of the codebook may be given by N1, N2, the number of panels (or coherence groups), and the number P of polarizations. In addition, the above-described method may be applied also to a type 2 CSI codebook. Oversampling may be applied to the type 1 CSI codebook and type 2 CSI codebook when generating codewords constituting each dimension based on a discrete Fourier transform (DFT) matrix or DFT vector. (O1, O2), which is a combination of oversampling factors, may be determined based on (N1, N2) and/or the number of CSI-RS antenna ports. Alternatively, (O1, O2), which is a combination of oversampling factors, may be determined based on (N1, N2, Ng) and/or the number of CSI-RS antenna ports. That is, the terminal may determine (O1, O2) to be applied to the codebook based on a predefined rule without relying on signaling from the base station. In the above-described exemplary embodiment, (O1, O2) may be oversampling factors for the parent codebook. Oversampling factor of a child codebook corresponding to the a-th CSI report sub-configuration may be referred to as (O1(a), O2(a)). Unlike the case of the parent codebook, (O1(a), O2(a)) to be applied to each child codebook may be signaled from the base station to the terminal. For example, information on (O1(a), O2(a)) may be included in configuration information of the a-th CSI report sub-configuration. Alternatively, (O1(a), O2(a)) to be applied to each child codebook may be determined based on (N1(a), N2(a)) and/or the number C(a) of CSI-RS antenna ports.

Additionally or alternatively, a CSI-RS antenna port set corresponding to each CSI report configuration may be expressed as a bitmap. The length of the bitmap may be C. Each of C bits constituting the bitmap may indicate whether each CSI-RS antenna port constituting the CSI-RS resource is muted. For example, a CSI-RS antenna port corresponding to a bit with a value of '1' (or '0') may be regarded as being included in the CSI-RS antenna port set, and a CSI-RS antenna port corresponding to a bit with a value of '0' (or '1') may be regarded as not being included in the CSI-RS antenna port set. In the bitmap corresponding to the a-th CSI report sub-configuration, values of bits corresponding to the C(a) CSI-RS antenna ports may be set to '1' (or '0'). That is, the number of bits whose value is set to '1' may be C(a). C(a) may match a value of 2*N1(a)*N2(a). The bitmap or information on the bitmap may be included in configuration information of each CSI report sub-configuration and may be transmitted to the terminal.

According to an exemplary embodiment, each bit in the bitmap may be determined independently regardless of values of other bit(s). That is, the bitmap may be configured as a bit string, and a spatial element pattern may be configured with antenna port(s) among the CSI-RS antenna ports constituting the CSI-RS resource. For example, a CSI-RS antenna port subset indicated by the bitmap may be mapped to single polarization antennas. As another example, a CSI-RS antenna port subset indicated by the bitmap may have a non-uniform pattern in the horizontal domain and/or vertical domain. Meanwhile, in the communication system (e.g. NR communication system), the CSI codebook may be designed to have optimal performance in a uniform two-dimensional planar array antenna structure with cross-polarization. In this case, when the spatial element pattern is configured as in the above-described exemplary embodiments, CSI accuracy may decrease.

According to another exemplary embodiment, a plurality of bits mapped to a specific location in the bitmap may have the same value. For example, two CSI-RS antenna ports that are mapped to sets of two antenna elements with the same location and different polarizations may be muted together or transmitted (i.e. not muted) together. Bits corresponding to the two CSI-RS antenna ports may have the same value (e.g. all 1, all 0). Specifically, when the length of the bitmap is P, the i-th bit and (i+P/2)-th bit of the bitmap may correspond to two CSI-RS antenna ports with the same spatial location and different polarizations, and the bits may have the same value. That is, a bit string of the first (P/2) bits of the bitmap and a bit string of the last (P/2) bits of the bitmap may be the same.

Meanwhile, CSI-RS antenna ports constituting the CSI-RS resource may be mapped to a plurality of panels. In this case, in addition to the cross-polarization structure, patterns (e.g. number and mapping structure) of the respective CSI-RS antenna ports mapped to the plurality of panels may be the same. For example, if the number of panels is 2 (Ng=2), the first (P/2) bits of the bitmap may correspond to CSI-RS antenna ports mapped to the first panel, and the last (P/2) bits of the bitmap may correspond to CSI-RS antenna ports mapped to the second panel. In this case, a bit string of the first (P/2) bits and a bit string of the last (P/2) bits may be the same. Additionally, the first (P/4) bits of the bitmap may correspond to CSI-RS antenna ports corresponding to the first polarization of the first panel, the second (P/4) bits of the bitmap may correspond CSI-RS antenna ports corresponding to the second polarization of the first panel, the third (P/4) bits of the bitmap may correspond to CSI-RS antenna ports corresponding to the first polarization of the second panel, and the last (P/4) bits of the bitmap may correspond to CSI-RS antenna ports corresponding to the second polarization of the second panel. In this case, a bit string of the first (P/4) bits and a bit string of the second (P/4) bits may be the same. Additionally, a bit string of the third (P/4) bits and a bit string of the last (P/4) bits may be the same. That is, the four bit strings may all match. The base station may determine the bitmap by considering the above constraints, and may configure CSI-RS antenna port subsets for the CSI report sub-configuration by signaling the determined bitmap to the terminal. The terminal may expect to be configured with a bitmap that satisfies the above conditions. If the bitmap does not satisfy the above conditions, the terminal may ignore the configuration and may omit a CSI reporting procedure corresponding to the configuration (e.g. a CSI report for the corresponding CSI report sub-configuration, or all CSI reports to which the corresponding CSI report sub-configuration belongs).

A certain spatial element pattern (e.g. a certain CSI report sub-configuration) may consist of two CSI-RS antenna ports. For example, the base station may indicate to the terminal that the size of the codebook corresponding to the CSI report sub-configuration is (N1, N2) = (1, 1) or (N1(a), N2(a)) = (1, 1). Configuration information of the CSI report sub-configuration may include the codebook configuration information. As another example, the configuration information of the CSI report sub-configuration may explicitly indicate that the number of CSI-RS antenna ports in the corresponding CSI-RS antenna port set is 2. The terminal may derive CSI based on the two corresponding CSI-RS antenna ports. The two CSI-RS antenna ports may be antenna ports corresponding to one specific row (e.g. first row) and one specific column (e.g. first column) in the spatial mapping structure of CSI-RS antenna ports. In this case, the CSI may be calculated based on a separate codebook, that is, a codebook defined in the technical specifications to be used when the number of CSI-RS antenna ports is 2. The codebook may be a codebook that is not configured as a Kronecker product of two matrixes. Alternatively, in the above-described method, a spatial element pattern consisting of two CSI-RS antenna ports (e.g. CSI report sub-configuration) may be excluded. The terminal may not expect configuration like the above examples.

An inclusion relationship may be established between CSI-RS antenna port sets configured in the terminal. In the above exemplary embodiment, an inclusion relationship is established between arbitrary two CSI-RS antenna port sets among the first, second, and fifth CSI-RS antenna port sets, and the CSI-RS antenna port sets for the same CSI-RS resource may be configured in the terminal at the same time. On the other hand, an inclusion relationship may not be established between the second and third CSI-RS antenna port sets, and the CSI-RS antenna port sets for which an inclusion relationship is not established may not be configured to be associated with the same CSI-RS resource. Similarly, an inclusion relationship may be established between CSI-RS muting patterns (i.e. muted CSI-RS antenna port sets) configured in the terminal, and the terminal may be configured with CSI-RS muting patterns for which the inclusion relationship is established for the same CSI-RS resource, at the same time. The CSI-RS muting patterns for which an inclusion relationship is not established may not be configured to be associated with the same CSI-RS resource.

In addition, an inclusion relationship may be established between codebooks associated with CSI-RS antenna port sets within the same CSI-RS resource or between codebooks associated with the same CSI-RS resource. In the above-described exemplary embodiment, the CSI corresponding to the first CSI-RS antenna port set may be derived based on a 2D structure having the structure of (N1, N2) = (4, 2) or (N1, N2, P) = (4, 2, 2), and the CSI corresponding to the second CSI-RS antenna port set may be derived based on a 2D codebook having the structure of (N1, N2) = (4, 1) or (N1, N2, P) = (4, 1, 2). The latter 2D codebook may be configured as a part of the former 2D codebook, and may have a length that is less than or equal to (or not greater than) the former 2D codebook in each transmission direction (or domain). The lengths of the polarization directions (or domains) of the codebooks associated with the CSI-RS antenna port sets, denoted as P, may be the same. In the above-described exemplary embodiment, both the former 2D codebook and the latter 2D codebook may have P=2.

Within each CSI-RS antenna port set, CSI-RS antenna port numbers may be numbered in ascending order starting from 0 (or from 3000 in the NR communication system). In the above-described exemplary embodiment, 8 CSI-RS antenna ports constituting the third CSI-RS antenna port set may have antenna port numbers 0, 1, 2, 3, 8, 9, 10, and 11 in terms of the entire CSI-RS resource before muting is applied. However, they may be renumbered from 0 to 7 within the CSI-RS antenna port set. The terminal may calculate CSI (e.g. PMI, CQI, RI) based on the numbers indexed within the CSI-RS antenna port set.

Configuration information on the CSI codebook applied to CSI calculation may be included in CSI report configuration information, and may be associated with each CSI report. In case of the second CSI reporting method, CSI codebook configuration information may be included in each CSI report sub-configuration information and may be used for a CSI report corresponding to each CSI report sub-configuration. When the terminal performs the above-described CSI-RS reception and CSI measurement operations based on the CSI-RS resource, they may be performed based on the codebook configuration information included in the CSI report associated with the CSI-RS resource. Alternatively, information on the CSI codebook may be included in CSI resource configuration information and may be associated with each CSI resource or each CSI-RS resource. Configuration information of the 2D codebook may include at least N1 and/or N2. The configuration information of the 2D codebook may additionally include P. In the first exemplary embodiment of FIG. 8, (N1, N2) = (4, 2) or (N1, N2, P) = (4, 2, 2), and based on the information, the terminal may assume the arrangement of CSI-RS antenna ports shown in the drawing.

According to (Method 100), the base station may transmit all CSI-RS antenna ports constituting the CSI-RS resource to the terminal in the CSI-RS resource of each cycle. Alternatively, the base station may transmit to the terminal a union of all CSI-RS antenna port sets configured in the CSI-RS resource of each cycle. That is, until the CSI-RS resource is reconfigured, the terminal may receive the same number of CSI-RS antenna ports in the CSI-RS resource of each cycle (e.g. each CSI-RS occasion).

Meanwhile, among the CSI-RS antenna port sets configured in the terminal, some CSI-RS antenna port set(s) may be dynamically indicated to the terminal. The dynamic indication may be performed by DCI. The DCI may include information on ID(s) or index(es) of the CSI-RS antenna port set(s) to be indicated to the terminal. Additionally or alternatively, as described above, some of CSI report configurations or CSI report sub-configurations configured in the terminal may be dynamically indicated to the terminal. The DCI may include information on ID(s) or index(es) of CSI report configuration(s) or CSI report sub-configuration(s) to be indicated to the terminal, and may indicate the corresponding CSI reporting operation. The terminal may perform CSI measurement and reporting operations for the indicated CSI-RS antenna port set(s) and/or indicated CSI report configuration(s) (or CSI report sub-configuration(s)). The terminal may not perform CSI measurement and reporting operations for unindicated CSI-RS antenna port set(s) and/or unindicated CSI report configuration(s) (or CSI report sub-configuration(s)).

As another method, the terminal may transmit to the terminal CSI report(s) for all configured CSI-RS antenna port sets and all configured CSI report configurations (or all CSI report sub-configurations), regardless of whether the CSI-RS antenna port set(s) and/or CSI report configuration(s) (or CSI report sub-configuration(s)) are dynamically indicated. In this case, CSI report(s) corresponding to the unindicated CSI-RS antenna port set(s) and/or the unindicated CSI report configuration(s) (or CSI report sub-configuration(s)) may have dummy values. According to this scheme, the size of the CSI report information may be maintained constant regardless of the dynamic indication.

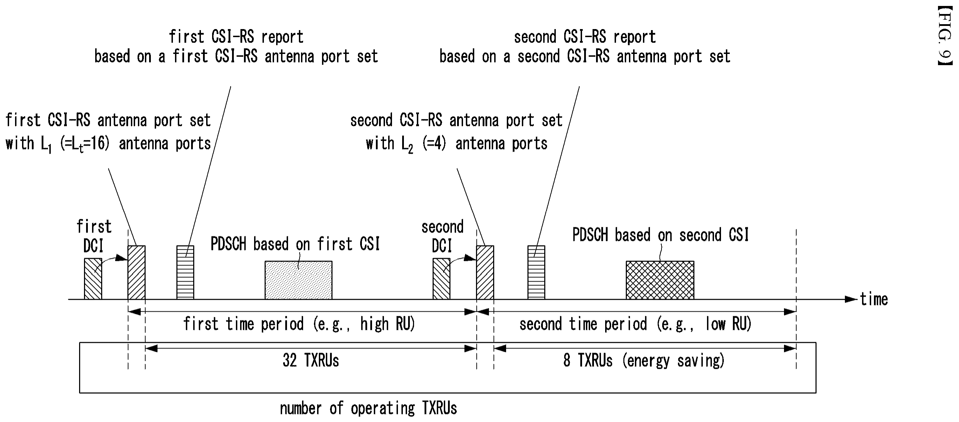

FIG. 9 is a conceptual diagram illustrating a second exemplary embodiment of a CSI reporting method based on a plurality of CSI-RS antenna port sets.

Referring to FIG. 9, the terminal may receive configuration information of CSI-RS resource(s) from the base station. The CSI-RS resource may consist of Lₜ=16 CSI-RS antenna ports. The CSI-RS resource may appear periodically and repeatedly.

The terminal may be configured or indicated by the base station to have CSI-RS antenna ports to be received in the CSI-RS resource, that is, a set (i.e. subset) of CSI-RS antenna ports. In the above-described exemplary embodiment, the terminal may receive a first DCI, and may be indicated to receive (i.e. activate) a first CSI-RS antenna port set configured with L₁ = Lₜ = 16 CSI-RS antenna ports in the CSI-RS resource based on the first DCI. The terminal may measure CSI based on the first CSI-RS antenna port set during a first time period for receiving the first CSI-RS antenna port set, and report a first CSI corresponding to the first CSI-RS antenna port set to the base station. In addition, the terminal may receive a second DCI, and may be indicated to receive a second CSI-RS antenna port set configured with L₂ = 4 CSI-RS antenna ports in the CSI-RS resource based on the second DCI. The terminal may measure CSI based on the second CSI-RS antenna port set during a second time period for receiving the second CSI-RS antenna port set, and report a second CSI corresponding to the second CSI-RS antenna port set to the base station. The above-described method may be referred to as (Method 200).

As a specific method of indicating the CSI-RS antenna port set, the terminal may configure a plurality of CSI-RS antenna port sets based on configuration information received from the base station. The configuration information may be transmitted based on higher layer signaling (e.g. RRC signaling, MAC CE). The terminal may be indicated to use one (or more than one) CSI-RS antenna port set among the plurality of CSI-RS antenna port sets through DCI. The DCI may include an ID or index of the CSI-RS antenna port set to be indicated. Alternatively, configuration information of the CSI-RS antenna port set may be directly included in the DCI, and the terminal may configure the CSI-RS antenna port set based on the DCI and receive the CSI-RS antenna port set. Alternatively, the CSI-RS antenna port set may be indicated only by higher layer signaling (e.g. RRC signaling, MAC CE) without the DCI transmission procedure.

As another method, as described above, the terminal may receive a CSI report configuration including a plurality of CSI report sub-configurations from the base station. Each CSI report sub-configuration may correspond to each spatial element pattern, that is, each CSI-RS antenna port set. The terminal may be indicated to receive one (or more than one) CSI report sub-configuration(s) through DCI, receive CSI-RS antenna port set(s) corresponding to the CSI report sub-configuration(s), and perform a CSI measurement and reporting operation corresponding to the above-described method. The terminal may omit an operation of receiving a CSI-RS antenna port that is not included in the indicated CSI-RS antenna port set(s) among the CSI-RS antenna ports belonging to the CSI-RS resource or CSI-RS resource set.

If the indicated CSI report sub-configuration(s) are plural, the above-described codebook inclusion relationship may be established for the plurality of CSI report sub-configurations. For example, configuration information of a first codebook of a first CSI report sub-configuration and a second codebook of a second CSI report sub-configuration, which are indicated by DCI, may include (N1(1), N2(1)) and (N1(2) and N2(2)), respectively. In this case, the horizontal and vertical domain codeword lengths of the first codebook may be smaller than or equal to those of the second codebook, respectively. That is, N1(1) ≤ N1(2) and N2(1) ≤ N2(2).

In order to substantially increase power efficiency of the base station, the above-described CSI-RS antenna port scaling or muting method may be commonly applied to a plurality of terminals that communicate with the base station. Accordingly, the information indicating the CSI-RS antenna port set and/or configuration information of the CSI-RS antenna port set may be transmitted to the terminal (or terminal group) based on a group common DCI. In the NR communication system, the group common DCI may have a DCI format 2_X (X is an integer greater than or equal to 0). The terminal may monitor the group common DCI in a CSS set (e.g. type 3 CSS set). The CSS set may be associated with a CORESET. When a DRX operation is configured in the terminal, the group common DCI may be monitored during a DRX active time (or on-duration). In addition, the group common DCI may further include information indicating the DRX operation of the terminal (or cell DTX operation, DRX operation of the terminal corresponding to the cell DTX operation). For example, the group common DCI may additionally include information indicating the terminal to wake up in the next active time (or on-duration) and perform a PDCCH monitoring operation, a downlink signal reception operation, and the like, information indicating the terminal to enter a sleep mode in the next inactive time and to skip reception of (at least some) downlink signals, or the like. For the wake-up indication, the terminal may monitor the group common DCI (or corresponding search space set, CORESET) in a period outside the DTX active time (or in an inactive time).

Likewise, as in the method described above, the CSI report sub-configuration(s) may be indicated by the group common DCI. Each CSI report sub-configuration may correspond to each spatial element pattern, that is, each CSI-RS antenna port set. The terminal may be indicated to receive one (or more than one) CSI report sub-configuration(s) through the group common DCI, receive CSI-RS antenna port set(s) corresponding to the CSI report sub-configuration(s), and perform corresponding CSI measurement and reporting operations by the above-described method.

In the CSI-RS resource reception operation and the corresponding CSI measurement and reporting operation, the terminal may apply the CSI-RS antenna port set(s) indicated by the DCI from a first time and receive the CSI-RS resources (i.e. applied CSI -RS antenna port set(s)). The first time may be determined based on a time at which the DCI is received. For example, the first time may be determined as a time after a certain time offset elapses from the time at which the DCI is received. The first time may be indicated as a slot. The first time may be a slot after a slot in which the DCI is received. For example, the first time may be determined as a slot to which a symbol belongs, which is located after A (A is a natural number) symbols from a symbol (e.g. the last symbol) in which the DCI is received, or as the next slot of that slot. A may be predefined in the technical specifications. A may be determined by a PDCCH reception ability or capability of the terminal. When activation and deactivation operations are applied to the CSI-RS resource or CSI-RS antenna port set, the CSI-RS antenna port set(s) indicated by the DCI may be regarded as being activated from a time at which the DCI is received or from the first time. In addition, the CSI-RS antenna port set(s) indicated by the DCI may be regarded as being activated by default (i.e. without separate activation indication). At the same time as the indicated CSI-RS antenna port set(s) are activated, the previous CSI-RS antenna port set(s) may be deactivated.

If the (activated) CSI-RS antenna port set is changed by the method described above, the terminal may reset the CSI measurement operation. The terminal may reset the CSI measurement operation based on the first time, that is, the time from which the indicated CSI-RS antenna port set is applied. Accordingly, a CSI corresponding to the indicated CSI-RS antenna port set may be calculated based on CSI-RS resource(s) (or CSI-RS occasion(s)) received in a time period form the first time (e.g. a slot corresponding to the first time) to a CSI reference resource (e.g. a slot corresponding to the CSI reference resource). CSI-RS resource(s) (or CSI-RS occasion(s)) received before the first time (e.g. a slot corresponding to the first time) may not be used to derive the CSI corresponding to the indicated CSI-RS antenna port set. According to the above-described reset operation, one CSI (i.e. one CSI instance, one CSI report instance) reported to the base station may be calculated based on CSI-RS resource(s) (or CSI-RS occasion(s)) received for the one CSI-RS antenna port set, and CSI accuracy can still be guaranteed. The CSI reference resource may be determined as one slot that sufficiently precedes a CSI reporting time (e.g. slot) by a reference value. The CSI reference resource may be a downlink slot. Alternatively, the CSI reference resource may be a slot including at least one downlink symbol or flexible symbol.

An operation of the terminal configuring a CSI-RS antenna port set may be performed by the method described above. The first configuration information may be transmitted to the terminal, and the first configuration information may include information on CSI-RS antenna ports constituting the CSI-RS antenna port set or information on muted CSI-RS antenna port(s) excluded from the CSI-RS antenna port set. In addition, the information may be expressed as information on the locations of CSI-RS antenna ports in each dimension of the 2D codebook (e.g. information indicating locations of elements of the matrix) based on (Method 110).

According to (Method 200), the number of CSI-RS antenna ports (or CSI-RS antenna port set) that the terminal receives for the same CSI-RS resource may change temporally. Additionally, the number of TXRUs used for CSI-RS transmission may vary temporally. In the above-described exemplary embodiment, 32 TXRUs may be used for CSI-RS transmission in the first time period in which the first CSI-RS antenna port set is transmitted. On the other hand, in the second time period in which the second CSI-RS antenna port set is transmitted, 8 TXRUs may be used for CSI-RS transmission. The number of TXRUs used for CSI-RS transmission may match the number of TXRUs used to transmit other signals (e.g. PDSCH) within the same time period. Therefore, the base station may operate only a small number of TXRUs in the second time period including CSI-RS transmission symbol(s) (i.e. symbol(s) in which CSI-RS is transmitted). As a result, (Method 200) may be advantageous for low-power operations compared to (Method 100), which requires higher power consumption in the CSI-RS transmission symbol(s) and a period before and after the CSI-RS transmission symbol(s). In addition, according to (Method 200), the terminal may measure and transmit only one CSI report for each CSI report instance, and compared to (Method 100), which transmits multiple CSI reports each time, the computational complexity and uplink resource efficiency of the terminal can be improved.

Hereinafter, specific methods for mapping a CSI-RS antenna port set to a CSI-RS resource according to exemplary embodiments of the present disclosure will be described. Exemplary embodiments (Methods 310 to 330) described below and their detailed exemplary embodiments may be applied to (Method 100) or (Method 200) described above.

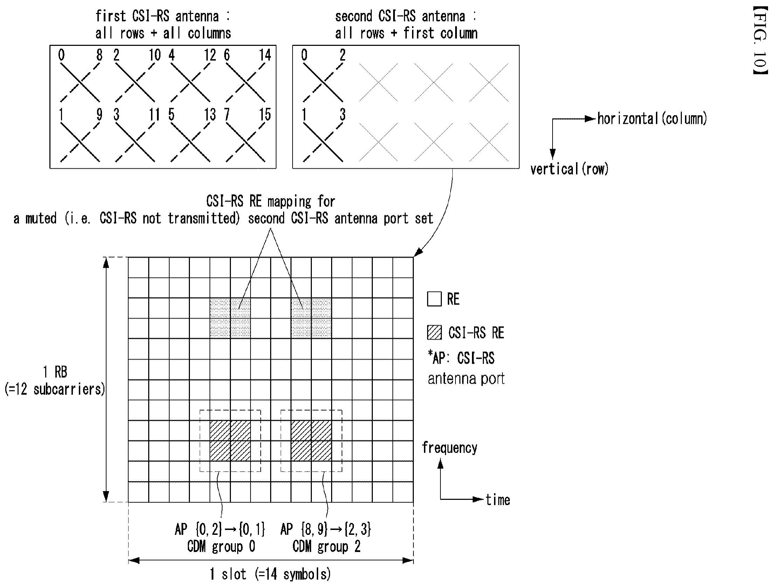

FIG. 10 is a conceptual diagram illustrating a first exemplary embodiment of a resource mapping method for a CSI-RS antenna port set.

Referring to FIG. 10, the first and second CSI-RS antenna port sets of the above-described exemplary embodiment may be mapped to TXRUs (i.e. corresponding physical antennal elements) arranged in the first direction (e.g. horizontal direction), the second direction (e.g. vertical direction), and the third direction (e.g. polarization direction). In addition, the first and second CSI-RS antenna port sets may be indicated based on information on a 2D matrix corresponding to the first and second directions (or, information on a three-dimensional (3D) matrix corresponding to the first, second, and third directions).

Each CSI-RS antenna port set may be transmitted as being mapped on the CSI-RS resource. The first CSI-RS antenna port set may be composed of all CSI-RS antenna ports constituting the CSI-RS resource, and accordingly, the first CSI-RS antenna port set may follow an RE mapping pattern composed of all CSI-RS antenna ports, indicated by a CSI-RS resource configuration. That is, 16 CSI-RS antenna ports constituting the first CSI-RS antenna port set may be mapped to 16 REs in the same manner as shown in FIG. 3. On the other hand, the second CSI-RS antenna port set may be composed of some CSI-RS antenna ports that constitute the CSI-RS resource. In this case, several methods may be considered for mapping 4 CSI-RS antenna ports constituting the second CSI-RS antenna port set to the CSI-RS resource.

The first method is a method illustrated in FIG. 10, in which the CSI-RS antenna ports constituting the CSI-RS antenna port set may follow an RE mapping pattern defined for all CSI-RS antenna ports indicated by the CSI-RS resource configuration as it is. In the above-described exemplary embodiment, 4 CSI-RS antenna ports 0 to 3 may correspond to numbers 0, 1, 8, and 9 before being newly indexed, and may be mapped to 4 REs of the CDM group 0, 4 REs of the CDM group 0, 4 REs of the CDM group 2, and 4 REs of the CDM group 2, to which the CSI-RS antenna ports 0, 1, 8, and 9 are mapped in the entire mapping pattern composed of 16 CSI-RS antenna ports before being muted, respectively. Different codes (e.g. different OCCs) may be applied to CSI-RS antenna ports belonging to the same CDM group. As a result, 4 CSI-RS antenna ports may be mapped to 8 REs, and the 8 REs may occupy 4 symbols and 2 subcarriers. The remaining 8 REs (i.e. 4 REs in the CDM group 1 and 4 REs in the CDM group 3) to which the 4 CSI-RS antenna ports are not mapped in the entire mapping pattern may be muted. That is, the remaining 8 REs may not be used for transmission of the CSI-RS resource. The above-described method may be referred to as (Method 310).

According to (Method 310), even if the CSI-RS antenna port set is scaled and the CSI-RS antenna ports are re-indexed, the mapping relationship between the CSI-RS antenna ports and REs may be maintained. Therefore, the implementation complexity of the terminal may be relatively low. Additionally, a common mapping pattern may be used between terminals receiving CSI-RS antenna port sets with different scaling applied, and the CSI-RS resource may be shared between the terminals. However, in the above-described exemplary embodiment, in order to transmit the four CSI-RS antenna ports constituting the second CSI-RS antenna port set, 8 REs, which are twice as many as the required minimum number of REs, may be used, which cause a reduction of resource efficiency and an increase in CSI-RS transmission delay time.

In the second method, the CSI-RS antenna ports constituting the CSI-RS antenna port set may follow an RE mapping pattern composed of all CSI-RS antenna ports, which is indicated by the CSI-RS resource configuration, but may be sequentially mapped to the CSI-RS antenna based on newly assigned antenna port numbers within the CSI-RS antenna port set. The above-described method may be referred to as (Method 320).

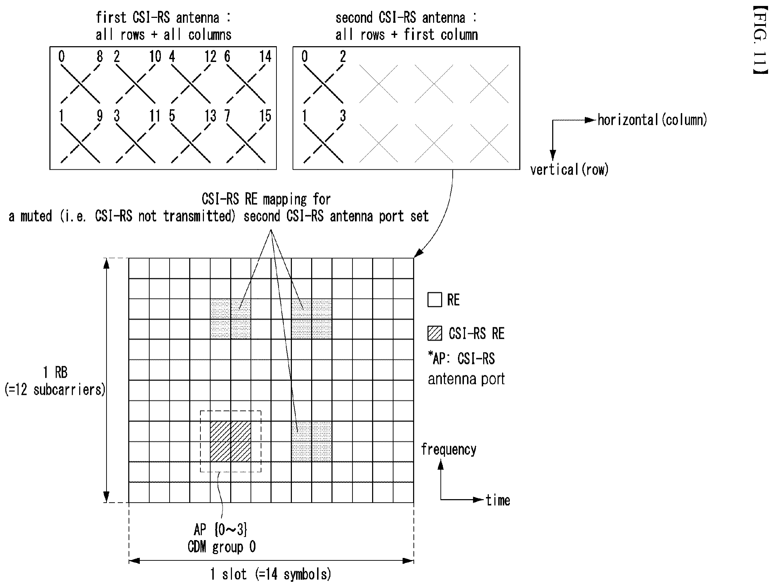

FIG. 11 is a conceptual diagram illustrating a second exemplary embodiment of a resource mapping method for a CSI-RS antenna port set.

Referring to FIG. 11, a CSI-RS antenna port set may be mapped on a CSI-RS resource by (Method 320). 4 CSI-RS antenna ports constituting the second CSI-RS antenna port set may have newly assigned indexes 0 to 3 within the CSI-RS antenna port set, and they may be mapped to REs based on the indexes according to the same CSI-RS resource mapping rule shown in FIG. 1. That is, the CSI-RS antenna ports 0 to 3 may be mapped to 4 REs constituting the CDM group 0 according to the rule that they are first mapped in ascending order within the CDM group, and different codes (e.g. different OCCs) may be applied thereto. The remaining 12 REs may not be used for transmission of the CSI-RS resource. Compared to the first exemplary embodiment, according to the present exemplary embodiment, the second CSI-RS antenna port set may be transmitted by occupying fewer REs and fewer symbols. Accordingly, resource efficiency and transmission delay time can be improved.

In the third method, the CSI-RS antenna ports constituting the CSI-RS antenna port set may be mapped on the CSI-RS resource according to a separate RE mapping pattern. The separate RE mapping pattern may be determined by rules predefined in the technical specifications. Alternatively, the separate RE mapping pattern may be transmitted from the base station to the terminal through a signaling procedure. The above-described method may be referred to as (Method 330).

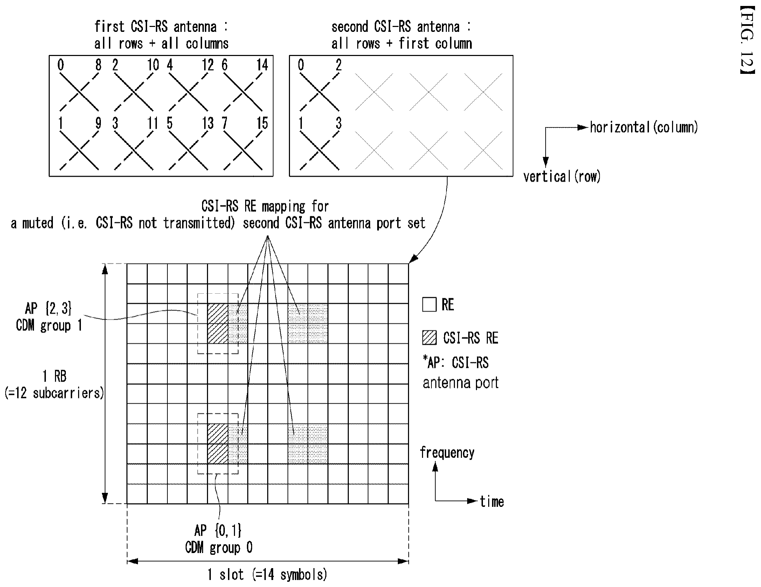

FIG. 12 is a conceptual diagram illustrating a third exemplary embodiment of a resource mapping method for a CSI-RS antenna port set.

Referring to FIG. 12, a CSI-RS antenna port set may be mapped on a CSI-RS resource by (Method 330). 4 CSI-RS antenna ports constituting the second CSI-RS antenna port set may have newly assigned indexes of 0 to 3 within the CSI-RS antenna port set, and may be mapped to REs by a separate CSI-RS mapping pattern. The separate mapping pattern may be composed of two CDM groups, each of the two CDM groups may be composed of two adjacent REs in the frequency domain, and the two CDM groups may be mapped to the same symbols. The CSI-RS antenna ports 0 to 3 may be mapped first within the CDM group, and then mapped second in the frequency domain by a rule of indexing in ascending order, so that they are mapped to 2 REs in the CDM group 0, 2 REs in the CDM group 0, 2 REs of the CDM group 1, and 2 REs of the CDM group 1, respectively. Different codes (e.g. different OCCs) may be applied to the CSI-RS antenna ports belonging to the same CDM group. As a result, 4 CSI-RS antenna ports may be mapped onto 4 REs and 1 symbol. Compared to the first exemplary embodiment, according to the present exemplary embodiment, the second CSI-RS antenna port set may be transmitted by occupying fewer REs and fewer symbols. Additionally, compared to the second exemplary embodiment, according to the present exemplary embodiment, the second CSI-RS antenna port set can be transmitted by occupying a smaller number of symbols. Accordingly, resource efficiency and transmission delay time can be improved.

In the above-described exemplary embodiment, the resource (i.e. a set of REs) constituting the separate RE mapping pattern for the CSI-RS antenna port set may be included the CSI-RS resource (i.e. a set of REs constituting the CSI-RS resource) before muting is applied. Referring to FIG. 12, 4 REs to which the second CSI-RS antenna port set is mapped may be a subset of 16 REs constituting the CSI-RS resource. That is, a nested structure may be established between the CSI-RS resource and the resource to which the CSI-RS antenna port set associated with the CSI-RS resource is mapped. Additionally, the separate RE mapping pattern may be determined based on resource mapping configuration information configured by the base station. For example, at least some of configuration information regarding the size of the CDM group to be applied to the separate RE mapping pattern, number of CDM groups, symbol(s) in which each CDM group is arranged, subcarrier(s) in which each CDM group is arranged, etc. may be signaled from the base station to the terminal. At least some of the above information may be signaled to the terminal separately from the resource mapping configuration information of the CSI-RS resource. For example, the size (i.e. 2 in the above example) of the CDM group for the CSI-RS antenna port set may be different from the size of (i.e. 4 in the above example) the CDM group configured for the CSI-RS resource.

According to another exemplary embodiment, the resources (i.e. a set of REs) constituting the separate RE mapping pattern for the CSI-RS antenna port set may include other resources (i.e. other RE)s) in addition to the CSI-RS resource (i.e. a set of REs constituting the CSI-RS resource) before muting is applied. For example, the CSI-RS antenna port constituting the second CSI-RS antenna port set may be mapped to a symbol (e.g. third symbol) other than symbols to which the CSI-RS resource is mapped. For another example, the CSI-RS antenna port constituting the second CSI-RS antenna port set may be mapped to a subcarrier (e.g. the first subcarrier) other than subcarriers to which the CSI-RS resource is mapped.

Additionally or alternatively to the above-described exemplary embodiment, the resource (i.e. a set of REs) constituting the separate RE mapping pattern for the CSI-RS antenna port set may be arranged in the same time resource unit (e.g. the same slot, the same subframe, the same subslot, etc.) as that of the CSI-RS resource (i.e. a set of REs) before muting is applied, and may have the same resource periodicity and time offset. According to the above-described method, even if the number of CSI-RS antenna ports is dynamically changed, the CSI-RS reception periodicity and timing of the terminal may be maintained.

According to the above-described exemplary embodiment, CSI-RS may not be transmitted in some RE(s) constituting the CSI-RS resource due to the CSI-RS muting operation. Referring to FIG. 10, the CSI-RS antenna port may not be mapped to 8 REs indicated on the ninth and tenth subcarriers, and CSI-RS may not be transmitted in the REs. Referring to FIG. 12, the CSI-RS antenna port may not be mapped to 12 REs shown in the sixth, ninth, and tenth symbols, and CSI-RS may not be transmitted in the REs.

In this case, the RE(s) may be used for transmission of other signals. The terminal may receive a downlink signal other than the CSI-RS resource in the RE(s). The downlink signal may include a PDSCH. That is, the terminal may receive the PDSCH in a resource including RE(s) to which the CSI-RS is not mapped. In other words, the PDSCH may not be rate-matched to the RE(s) to which the CSI-RS is not mapped. The terminal may receive the PDSCH in a resource other than RE(s) to which the CSI-RS is actually mapped (i.e. RE(s) to which the activated CSI-RS antenna port set is mapped) among the REs constituting the CSI-RS resource. That is, the PDSCH may be rate-matched around the RE(s) to which CSI-RS is actually mapped (i.e. RE(s) to which the activated CSI-RS antenna port set is mapped) among the REs constituting the CSI-RS resource. The rate matching operation described above may be referred to as a first rate matching operation. Whether or not the above-described PDSCH rate matching operation is performed may be determined based on a temporal relationship between a time at which the PDSCH is scheduled to the terminal (e.g. a time at which the terminal receives a scheduling DCI) and a time at which the terminal is indicated to receive the CSI-RS antenna port set (e.g. a time at which the terminal receives a DCI or MAC CE indicating to receive the CSI-RS antenna port set). If the time at which the PDSCH is scheduled to the terminal is not earlier (or later) than the time at which the terminal is indicated to receive the CSI-RS antenna port set, the terminal may receive the PDSCH based on the rate matching operation described above.

As another method, even if a CSI-RS is not actually transmitted in the RE(s), the terminal receive the PDSCH in a resource excluding the RE(s). That is, the PDSCH may be rate-matched to all RE(s) constituting the CSI-RS resource. In the above-described exemplary embodiments, regardless of whether CSI-RS muting is performed, the PDSCH may be received in a resource excluding the 16 REs constituting the CSI-RS resource. The rate matching operation described above may be referred to as a second rate matching operation. The first rate matching operation or the second rate matching operation may be selectively performed. The base station may indicate the terminal to perform one of the first rate matching operation and the second rate matching operation. Such indication information may be transmitted to the terminal based on a signaling procedure from the base station to the terminal (e.g. RRC signaling, DCI, MAC CE). Alternatively, the terminal may select one of the first rate matching operation and the second rate matching operation based on rules predefined in the technical specifications, and perform the selected operation. For example, the predefined rules may be defined based on the temporal relationship between the time at which the PDSCH is scheduled to the terminal (e.g. a time at which the terminal receives a scheduling DCI) and the time at which the terminal is indicated to receive the CSI-RS antenna port set. The terminal may receive the PDSCH based on the first rate matching operation if the time at which the PDSCH is scheduled is not earlier (or later) than the time at which the terminal is indicated to receive the CSI-RS antenna port set. Otherwise, the terminal may receive the PDSCH based on the second rate matching operation.

Alternatively, the downlink signal may include a PDCCH. The terminal may receive CSI-RS resource configuration information and CORESET configuration information that allows the CSI-RS resource and a CORESET to overlap. The terminal may monitor a PDCCH candidate mapped to a resource including RE(s) to which the CSI-RS is not mapped among PDCCH candidates belonging to the CORESET (or corresponding search space set), and receive the PDCCH in the corresponding resource.

Additionally, the terminal may transmit an uplink signal in the RE(s). For example, the RE(s) may be RE(s) in a flexible symbol, and the terminal may transmit an uplink signal in a resource including the RE(s). To this end, the CSI-RS resource and an uplink resource may be configured in the terminal to overlap. For example, the CSI-RS resource may overlap in the same symbol and/or in the same RE(s) with the SRS resource. As another example, the CSI-RS resource may overlap in the same symbol and/or in the same RE(s) with a PUCCH resource. Overlap between the CSI-RS resources and uplink resource may be allowed only for flexible symbols configured in the terminal.

In (Method 200), the terminal may receive a plurality of CSI-RS antenna port sets in a certain CSI-RS resource cycle (or time period). For example, the base station may indicate the terminal to receive a plurality of CSI-RS antenna port sets through DCI. The terminal may calculate CSI based on the plurality of CSI-RS antenna port sets. For example, the terminal may calculate CSI for each of the plurality of CSI-RS antenna port sets. The calculated CSI(s) may be reported to the base station. That is, (Method 200) may be performed in combination with (Method 100).

According to the description of the above-described exemplary embodiment, a plurality of (or more than one) CSI-RS antenna port sets may be configured or indicated for one CSI-RS resource. CSI(s) derived based on the plurality of CSI-RS antenna port sets may be CSI(s) corresponding to the CSI-RS resource, and may be reported to the base station based on a CSI report configuration corresponding to the CSI-RS resource. However, the above-described resource configuration is merely an example, and the spirit of the present disclosure is not limited to the above-described resource configuration and may be implemented in various forms. For example, in the above-described exemplary embodiment, 'one CSI-RS resource corresponding to one or more CSI-RS antenna port sets' may mean that one CSI-RS resource set corresponds to one or more CSI-RS resources. That is, the CSI-RS resource may correspond to a CSI-RS resource set, and the CSI-RS antenna port set may correspond to a CSI-RS resource. For another example, in the above-described exemplary embodiment, 'one CSI-RS resource corresponds to one or more CSI-RS antenna port sets' may mean that one CSI resource set corresponds to one or more CSI-RS resource sets. That is, the CSI-RS resource may correspond to a CSI resource set, and a CSI-RS antenna port set may correspond to a CSI-RS resource set. In this case, the above-described operation of configuring a CSI-RS antenna port set and an operation of associating the CSI-RS antenna port set with a corresponding CSI report may be interpreted as an operation of configuring a CSI-RS resource or CSI-RS resource set and an operation of associating it with a corresponding CSI report. For example, the first configuration information, CSI-RS muting pattern, etc. may be configured for each CSI-RS resource or each CSI-RS resource set. The terminal may generate CSI report information for each CSI-RS resource or each CSI-RS resource set, and transmit the generated CSI report(s) to the base station.

Meanwhile, a terminal may perform transmission and reception simultaneously with multiple TRPs. In downlink, the terminal receive PDSCH(s) from multiple TRPs. The multiple TRPs may transmit different layers of a PDSCH in the same resource. Alternatively, the multiple TRPs may transmit different PDSCHs to the terminal. In this case, resources of the PDSCHs transmitted from the multiple TRPs may or may not overlap. The above-described methods may be referred to as non-coherent joint transmission (NCJT).

The NCJT transmission scheme may be dynamically switched to or from a single TRP transmission scheme. Therefore, the terminal may measure CSI under the assumption of multi-TRP transmission (i.e. NCJT hypothesis). This may be referred to as an NCJT measurement hypothesis. In addition, the terminal may measure CSI under the assumption of single-TRP transmission. This may be referred to as a single-TRP measurement hypothesis. CSI based on the NCJT measurement hypothesis and CSI based on the single-TRP measurement hypothesis may be reported to the base station through one CSI report. For example, the terminal may select one (e.g. CSI corresponding to a CQI of the largest value) among CSI(s) based on the NCJT measurement hypothesis and CSI(s) based on the single-TRP measurement hypothesis, and report the selected CSI to the base station. Alternatively, the terminal may report both the CSI(s) based on the NCJT measurement hypothesis and the CSI(s) based on the single-TRP measurement hypothesis to the base station. A CSI-RS resource set configured in the terminal for the above-described CSI reporting operation may include a plurality of CSI-RS resources, and among these, CSI-RS resource pair(s) to be used for NCJT transmission may be separately configured in the terminal. Each CSI-RS resource may include unique TCI state information, and for example, each CSI-RS resource may correspond to each TRP.

In this case, to improve network power efficiency, TRPs may transmit and receive signals by applying a TXRU muting method. Likewise, each TXRU muting pattern may correspond to each CSI report sub-configuration, and the terminal may receive a CSI report configuration including a plurality of sub-configurations. In this case, each CSI-RS resource may be associated with the plurality of sub-configurations and may correspond to at least one of the NCJT measurement hypothesis and the single-TRP measurement hypothesis. For example, a first CSI-RS resource and a second CSI-RS resource belonging to the same CSI-RS resource set may be configured as a pair of CSI resources for channel measurement (CMRs), and the terminal may perform CSI measurement and reporting operation according to the NCJT measurement hypothesis based on the CMR pair. At the same time, a third CSI-RS resource may be referenced for CSI measurement and reporting by the single-TRP measurement hypothesis rather than being configured as a CMR pair. In this case, each sub-configuration configuring a CSI report may be associated with all CSI-RS resources and all CMR pairs constituting the CSI-RS resource set. In the above-described example, each sub-configuration may be associated with a CMR pair consisting of the first CSI-RS resource and the second CSI-RS resource and the third CSI-RS resource. The terminal may measure CSI according to the NCJT measurement hypothesis based on the CMR pair for each sub-configuration, and may measure CSI according to the single-TRP measurement hypothesis based on the third CSI-RS resource. The terminal may select one or multiple CSI(s) among these by the method described above and report the selected CSI(s) to the base station. CRI(s) corresponding to the CSI-RS resource(s) or CMR pair(s) on which the selected CSI(s) are based may also be reported.

The above-described CSI-RS scaling method or CSI-RS muting method may correspond to the first TXRU muting method. Meanwhile, as described above, when TXRUs are scaled by the second TXRU muting method, the number of corresponding CSI-RS antenna ports may not change. That is, even if the number of TXRUs to which CSI-RS antenna ports are mapped changes dynamically, the terminal may receive the same CSI-RS antenna ports in the CSI-RS resource in every cycle. In the exemplary embodiment of FIG. 5B, the terminal may receive the same 16 CSI-RS antenna ports before and after the TXRUs are muted. That is, the 16 CSI-RS antenna ports constituting the CSI-RS resource may be transmitted through a first TXRU set at a first time, and may be transmitted through a second TXRU set at a second time.

When TXRUs are scaled from the first TXRU set to the second TXRU set by the second TXRU muting method, mapping between each CSI-RS antenna port and physical antenna elements may be changed, and as a result, a beam pattern, coverage (or signal reach distance or coverage), etc. formed by each CSI-RS antenna port may be changed. Therefore, downlink measurement values, measurement qualities, etc. based on the CSI-RS resource transmitted through the first TXRU set may be different from downlink measurement values, measurement qualities, etc. based on the CSI-RS resource transmitted through the second TXRU set.

Accordingly, if the set of TXRUs used to transmit the CSI-RS resource changes, the base station may indicate the terminal to change the downlink measurement operation based on the CSI-RS resource. For example, the base station may indicate the terminal to reset the downlink measurement operation based on the CSI-RS resource. When the reset indication is received, the terminal may measure CSI based on the remaining CSI-RS resource(s) excluding CSI-RS resource(s) received before the reset application time (e.g. the first slot in which the reset is applied), and may report the measured CSI. Additionally, the terminal may measure and report CSI based on CSI-RS resource(s) received in a resource no later than a CSI reference resource. Combining the above-described operations, a CSI reporting may be calculated based on CSI-RS resource(s) received between the reset application time (e.g. slot corresponding thereto) and the CSI-RS reference resource (e.g. slot corresponding thereto). The reset indication may be performed dynamically by DCI. For example, the DCI may be a group common DCI.

Additionally, the DCI may be the DCI indicating the CSI-RS antenna port set in (Method 200) or a DCI corresponding thereto. In this case, the terminal may be indicated by the DCI the same CSI-RS antenna port set(s) as before. If the same CSI-RS antenna port set(s) as before are indicated, the terminal may regard these as TXRU scaling by the second TXRU muting method, and reset the CSI measurement and/or reporting operations by the above-described method. Alternatively, the reset indication may be performed by higher layer signaling (e.g. RRC signaling, MAC CE).

As a similar method, the terminal may be configured with a plurality of CSI-RS antenna port sets with the same number of antenna ports and/or antenna port configuration (e.g. parameters N1 and N2). For example, the CSI-RS resource or CSI-RS resource set may include a first CSI-RS antenna port set and a second CSI-RS antenna port set, and the first CSI-RS antenna port set and the second CSI-RS antenna port sets may be the same configuration. That is, the first CSI-RS antenna port set and the second CSI-RS antenna port set may be configured with the same number of antenna ports and/or antenna ports following the same configuration (e.g. the same parameters N1 and N2). Here, the first CSI-RS antenna port set and the second CSI-RS antenna port set may mean a plurality of different CSI-RS resources. The plurality of CSI-RS resources may be included in the CSI-RS resource set. Alternatively, the first CSI-RS antenna port set and the second CSI-RS antenna port set may correspond to a plurality of CSI report sub-configurations corresponding to the same CSI-RS resource. The number of CSI-RS antenna ports of the first CSI-RS antenna port set and the second CSI-RS antenna port set may be the same as the number of CSI-RS antenna ports of the CSI-RS resource.

The terminal may perform a CSI reporting operation based on the first CSI-RS antenna port set or a CSI report configuration (or CSI report sub-configuration) associated therewith in a first time period. In this case, the terminal may be indicated by the base station to perform a CSI reporting operation based on the second CSI-RS antenna port set or a CSI report configuration (or CSI reporting sub-configuration) associated therewith. For example, the indication may be performed by DCI. When indicated to switch from the first CSI-RS antenna port set (or corresponding CSI report configuration or CSI report sub-configuration) to the second CSI-RS antenna port set (or corresponding CSI report configuration or CSI report sub-configuration), the terminal may reset the CSI measurement or calculation operations. Alternatively, the terminal may distinguish a first CSI measurement and reporting operation for the first CSI-RS antenna port set (or corresponding CSI report configuration or CSI report sub-configuration) from a second CSI measurement and reporting operation for the second CSI-RS antenna port set (or corresponding CSI report configuration or CSI report sub-configuration). The first CSI measurement and reporting operation may correspond to a first CSI-RS antenna port virtualization or beamforming, and the second CSI measurement and reporting operation may correspond to a second CSI-RS antenna port virtualization or beamforming. According to the above-described method, the terminal and the base station may cope with beam or coverage changes according to the second TXRU muting method.

For example, the terminal may receive a CSI report configuration that includes a first CSI report sub-configuration and a second CSI report sub-configuration. The first CSI report sub-configuration may indicate a CSI measurement and reporting operation for a CSI-RS antenna port set transmitted by the first virtualization or the first TXRU set, and the second CSI report sub-configuration may indicate a CSI measurement and reporting operation for a CSI-RS antenna port set transmitted by the second virtualization and the second TXRU set. To this end, the first CSI report sub-configuration and the second CSI report sub-configuration may be associated with the first CSI-RS resource and the second CSI-RS resource, respectively. According to the above-described method, the first CSI-RS resource and the second CSI-RS resource may be included in the same CSI-RS resource set and may be configured with the same number of CSI-RS antenna ports. The transmission periods and periodicities of the first CSI-RS resource and the second CSI-RS resource may be the same.

On the other hand, the sets of REs to which the CSI-RS resource is mapped and mapping patterns therefor may be different between the first CSI-RS resource and the second CSI-RS resource. Specifically, each of the first CSI-RS resource and the second CSI-RS resource may be mapped to REs according to a mapping pattern based on independent CSI-RS resource configuration. However, considering the above-described second TXRU muting operation, it may be sufficient for the first CSI-RS resource and the second CSI-RS resource to be mapped on the same resources based on the same mapping pattern. For example, the first CSI-RS resource and the second CSI-RS resource may be configured to fully overlap, and the sets of mapped REs and RE mapping patterns therefor may also match. That is, the first CSI-RS resource and the second CSI-RS resource may not be physically distinguished, but may only be logically distinguished by being referred to by different CSI report sub-configurations.

As described above, a plurality of different CSI resources may each be counted from a CPU perspective. According to this, the first CSI-RS resource and the second CSI-RS resource may occupy two CPUs. However, considering the second TXRU muting method, the terminal may not simultaneously perform a CSI measurement and reporting operation for the first CSI-RS resource and a CSI measurement and reporting operation for the second CSI-RS resource. That is, the terminal may receive the first CSI-RS resource for CSI measurement in a first time period, and may receive the second CSI-RS resource for CSI measurement in a second time period. The first time period and the second time period may not overlap. Switching from the first time period to the second time period, or from the second time period to the first time period, may be indicated to the terminal by the signaling method described above. In this case, the CSI calculation complexity of the terminal in each of the first time period and the second time period may correspond to a CSI measurement operation corresponding to one CSI-RS resource. That is, the actual CSI measurement operation of the terminal in the first time period may occupy one CPU, and similarly, the actual CSI measurement operation of the terminal in the second time period may occupy one CPU.

Accordingly, in a proposed method, the first CSI-RS resource and the second CSI-RS resource may occupy one CPU. That is, the first CSI-RS resource and the second CSI-RS resource may not be counted each from a CPU perspective and may be counted only once. Alternatively, only one CSI-RS resource among the first CSI-RS resource and the second CSI-RS resource may occupy the CPU. For example, one of the CSI-RS resources may be determined based on a CSI-RS resource index or an associated CSI report sub-configuration index. The method may be applied only when the above-mentioned conditions are satisfied, that is, when the first CSI-RS resource and the second CSI-RS resource are referenced by different CSI report sub-configurations. The different CSI report sub-configurations may be sub-configurations included in the same CSI report configuration. In addition, conditions for applying the method may further include a condition that the first CSI-RS resource and the second CSI-RS resource overlap (e.g. fully overlap), a condition that RE mappings of the first CSI-RS resource and the second CSI-RS resource are the same, and/or the like. According to the proposed method, CPUs of the terminal may be calculated to reflect the actual CSI calculation complexity of the terminal, and the terminal may utilize the remaining CPUs to perform additional CSI measurement and reporting operations in the corresponding period, for example, the CSI measurement and reporting operations for the third CSI-RS resource. The third CSI-RS resource may be referenced by the first CSI report sub-configuration or the second CSI report sub-configuration. Alternatively, the third CSI-RS resource may be referenced by a CSI report sub-configuration or CSI report configuration other than the first CSI report sub-configuration and the second CSI report sub-configuration.

Likewise, the CSI-RS antenna ports constituting the first CSI-RS resource and the CSI-RS antenna ports constituting the second CSI-RS resource may not be redundantly counted as active CSI-RS antenna ports. That is, when the first CSI-RS resource and the second CSI-RS resource are composed of R CSI-RS antenna ports, the number of corresponding active CSI-RS antenna ports may be R rather than 2*R. For example, only CSI-RS antenna ports constituting one CSI-RS resource among the first CSI-RS resource and the second CSI-RS resource may be counted as active CSI-RS antenna ports. Similarly, the one CSI-RS resource may be determined based on a CSI-RS resource index or an associated CSI report sub-configuration index.

Meanwhile, when the terminal is configured to limit CSI measurement resources, the terminal may measure CSI based on one CSI-RS resource (or CSI-RS instance). In this case, even if TXRUs to which the CSI-RS antenna ports are connected are changed, the CSI measurement and reporting operations of the terminal may be performed identically without change. In light of this, a method of limiting use of the second TXRU muting method to cases where the terminal performs a CSI measurement operation with limited CSI measurement resources may be considered.

The above-described CSI-RS scaling or muting methods may basically be applied to periodic CSI-RS and semi-persistent CSI-RS. Additionally, the corresponding CSI reporting method described above may be applied to periodic CSI reporting, semi-persistent CSI reporting, and aperiodic CSI reporting procedures. In case of aperiodic CSI-RS, the terminal may be configured with a plurality of CSI-RS resources for a CSI-RS resource set, and may be dynamically indicated by DCI to receive one of the plurality of CSI-RS resources. In this case, each CSI-RS resource may correspond to the above-described CSI-RS antenna port set.

The above-described CSI-RS scaling or muting methods may be performed in the same or similar manner for ZP CSI-RS and CSI-interference measurement (IM). For example, in the above-described exemplary embodiments, the CSI-RS resource may be replaced with a ZP CSI-RS resource, and the CSI-RS antenna port set may be replaced with a ZP CSI-RS antenna port set. According to the above-described method, the terminal may configure ZP CSI-RS antenna port set(s) for a ZP CSI-RS resource, and perform a rate matching operation (e.g. PDSCH rate matching operation) for the ZP CSI-RS antenna port set(s). That is, a PDSCH may be mapped to a resource excluding REs to which the ZP CSI-RS antenna port set is mapped, and may be transmitted to the terminal. For another example, in the above-described exemplary embodiments, the CSI-RS resource may be replaced with a CSI-IM resource (or, NZP CSI-IM resource), and the CSI-RS antenna port set may be replaced with a CSI-IM antenna port set (or, NZP CSI-IM antenna port set). The terminal may perform interference measurement operations in the CSI-IM antenna port set. The above-described CSI-RS scaling or muting methods may be performed in the same or similar manner for a ZP CSI-RS and CSI-IM. For example, in the above-described exemplary embodiments, the CSI-RS resource may be replaced with a ZP CSI-RS resource, and the CSI-RS antenna port set may be replaced with a ZP CSI-RS antenna port set. According to the above-described methods, the terminal may configure ZP CSI-RS antenna port set(s) for a ZP CSI-RS resource, and perform a rate matching operation (e.g. PDSCH rate matching operation) for the ZP CSI-RS antenna port set(s). That is, a PDSCH may be mapped to a resource excluding REs to which the ZP CSI-RS antenna port set is mapped, and may be transmitted to the terminal. For another example, in the above-described exemplary embodiments, the CSI-RS resource may be replaced with a CSI-IM resource (or, NZP CSI-IM resource), and the CSI-RS antenna port set may be replaced with a CSI-IM antenna port set (or, NZP CSI-IM antenna port set). The terminal may perform interference measurement operations in the CSI-IM antenna port set.

The operations of the method according to the exemplary embodiment of the present disclosure can be implemented as a computer readable program or code in a computer readable recording medium. The computer readable recording medium may include all kinds of recording apparatus for storing data which can be read by a computer system. Furthermore, the computer readable recording medium may store and execute programs or codes which can be distributed in computer systems connected through a network and read through computers in a distributed manner.

The computer readable recording medium may include a hardware apparatus which is specifically configured to store and execute a program command, such as a ROM, RAM or flash memory. The program command may include not only machine language codes created by a compiler, but also high-level language codes which can be executed by a computer using an interpreter.

Although some aspects of the present disclosure have been described in the context of the apparatus, the aspects may indicate the corresponding descriptions according to the method, and the blocks or apparatus may correspond to the steps of the method or the features of the steps. Similarly, the aspects described in the context of the method may be expressed as the features of the corresponding blocks or items or the corresponding apparatus. Some or all of the steps of the method may be executed by (or using) a hardware apparatus such as a microprocessor, a programmable computer or an electronic circuit. In some embodiments, one or more of the most important steps of the method may be executed by such an apparatus.

In some exemplary embodiments, a programmable logic device such as a field-programmable gate array may be used to perform some or all of functions of the methods described herein. In some exemplary embodiments, the field-programmable gate array may be operated with a microprocessor to perform one of the methods described herein. In general, the methods are preferably performed by a certain hardware device.

The description of the disclosure is merely exemplary in nature and, thus, variations that do not depart from the substance of the disclosure are intended to be within the scope of the disclosure. Such variations are not to be regarded as a departure from the spirit and scope of the disclosure. Thus, it will be understood by those of ordinary skill in the art that various changes in form and details may be made without departing from the spirit and scope as defined by the following claims.

## Claims

1. A method of a terminal, comprising:
receiving first configuration information on a first channel state information-reference signal (CSI-RS) resource from a base station;
receiving second configuration information for a CSI reporting operation from the base station;
receiving a CSI-RS through M CSI-RS antenna ports which are a first subset of L CSI-RS antenna ports corresponding to the first CSI-RS resource, based on the first configuration information and the second configuration information, wherein L is a natural number, and M is a natural number equal to or less than L;
determining a first precoding matrix indicator (PMI) based on the M CSI-RS antenna ports; and
transmitting a CSI report including the first PMI to the base station,
wherein the determining of the first PMI is performed based on a codebook in which sizes of at least a first dimension and a second dimension are N1 and N2, respectively, and N1 and N2 are each determined as a divisor of M.

2. The method according to claim 1, wherein the second configuration information includes configuration information of a plurality of CSI report sub-configurations, the first CSI-RS resource is referenced by a first CSI report sub-configuration included in the plurality of CSI report sub-configurations, and the first PMI is a CSI corresponding to the first CSI report sub-configuration.

3. The method according to claim 2, wherein a second CSI-RS resource is additionally referenced by the first CSI report sub-configuration, a CSI corresponding to the first CSI report sub-configuration includes a CSI-RS resource indicator (CRI), and the CRI is an index of the first CSI-RS resource or the second CSI-RS resource.

4. The method according to claim 3, wherein the second CSI-RS resource corresponds to L CSI-RS antenna ports and belongs to a same CSI-RS resource set as the first CSI-RS.

5. The method according to claim 1, wherein the M CSI-RS antenna ports are expressed as a bitmap of a length L, and the bitmap is transmitted from the base station to the terminal as being included in the second configuration information.

6. The method according to claim 1, wherein antenna port numbers of the M CSI-RS antenna ports are reassigned in ascending order with continuous values from P to (P+M-1), P is 0 or a natural number, and the first PMI is determined based on the reassigned antenna port numbers.

7. The method according to claim 1, wherein M=2*N1*N2, N1 is a value based on a number of CSI-RS antenna ports corresponding to the first dimension, and N2 is a value based on a number of CSI-RS antenna ports corresponding to the second dimension.

8. The method according to claim 1, wherein M=2*N1*N2*Ng, N1 is a value based on a number of CSI-RS antenna ports corresponding to the first dimension, N2 is a value based on a number of CSI-RS antenna ports corresponding to the second dimension, Ng is a number of antenna panels, and the codebook is a codebook for multiple panels consisting of Ng panels.

9. The method according to claim 2, further comprising:
receiving a CSI-RS through M2 CSI-RS antenna ports, which is a second subset of the L CSI-RS antenna ports; and
determining a second PMI based on the M2 CSI-RS antenna ports.

10. The method according to claim 9, wherein the second PMI is included in the CSI report and transmitted to the base station based on an indication by a higher layer message.

11. The method according to claim 9, wherein the first CSI-RS resource is referenced by a second CSI report sub-configuration included in the plurality of CSI report sub-configurations, and the second PMI is a CSI corresponding to the second CSI report sub-configuration.

12. A method of a base station, comprising:
transmitting first configuration information on a first channel state information-reference signal (CSI-RS) resource to the terminal;
transmitting second configuration information for CSI reporting to the terminal;
transmitting a CSI-RS to the terminal through all or part of L CSI-RS antenna ports corresponding to the first CSI-RS resource, wherein L is a natural number; and
receiving, from the terminal, a CSI report including a first precoding matrix indicator (PMI) determined based on M CSI-RS antenna ports which are a first subset of the L CSI-RS antenna ports determined based on the first configuration information and the second configuration information,
wherein the first PMI is determined based on a code book in which sizes of at least a first dimension and a second dimension are N1 and N2, respectively, and N1 and N2 are each determined as a divisor of M.

13. The method according to claim 12, wherein the second configuration information includes configuration information of a plurality of CSI report sub-configurations, the first CSI-RS resource is referenced by a first CSI report sub-configuration included in the plurality of CSI report sub-configurations, and the first PMI is a CSI corresponding to the first CSI report sub-configuration.

14. The method according to claim 13, wherein a second CSI-RS resource is additionally referenced by the first CSI report sub-configuration, a CSI corresponding to the first CSI report sub-configuration includes a CSI-RS resource indicator (CRI), and the CRI is an index of the first CSI-RS resource or the second CSI-RS resource.

15. The method according to claim 14, wherein the second CSI-RS resource corresponds to L CSI-RS antenna ports and belongs to a same CSI-RS resource set as the first CSI-RS.

16. The method according to claim 12, wherein the M CSI-RS antenna ports are expressed as a bitmap of a length L, and the bitmap is transmitted from the base station to the terminal as being included in the second configuration information.

17. The method according to claim 12, wherein antenna port numbers of the M CSI-RS antenna ports are reassigned in ascending order with continuous values from P to (P+M-1), P is 0 or a natural number, and the first PMI is determined based on the reassigned antenna port numbers.

18. The method according to claim 12, wherein M=2*N1*N2, N1 is a value based on a number of CSI-RS antenna ports corresponding to the first dimension, and N2 is a value based on a number of CSI-RS antenna ports corresponding to the second dimension.

19. The method according to claim 12, wherein M=2*N1*N2*Ng, N1 is a value based on a number of CSI-RS antenna ports corresponding to the first dimension, N2 is a value based on a number of CSI-RS antenna ports corresponding to the second dimension, Ng is a number of antenna panels, and the codebook is a codebook for multiple panels consisting of Ng panels.

20. A terminal comprising a processor, wherein the processor causes the terminal to perform:
receiving first configuration information on a first channel state information-reference signal (CSI-RS) resource from a base station;
receiving second configuration information for a CSI reporting operation from the base station;
receiving a CSI-RS through M CSI-RS antenna ports which are a first subset of L CSI-RS antenna ports corresponding to the first CSI-RS resource, based on the first configuration information and the second configuration information, wherein L is a natural number, and M is a natural number equal to or less than L;
determining a first precoding matrix indicator (PMI) based on the M CSI-RS antenna ports; and
transmitting a CSI report including the first PMI to the base station,
wherein the determining of the first PMI is performed based on a codebook in which sizes of at least a first dimension and a second dimension are N1 and N2, respectively, and N1 and N2 are each determined as a divisor of M.
